(19) Europäisches Patentamt
European Patent Office
Office européen des brevets

(11) EP 3 286 254 B1

# (12) FASCICULE DE BREVET EUROPEEN

(45) Date de publication et mention de la délivrance du brevet:
**20.02.2019 Bulletin 2019/08**

(21) Numéro de dépôt: **16721729.8**

(22) Date de dépôt: **22.04.2016**

(51) Int Cl.:
***C08J 3/24*** (2006.01) ***C08L 67/04*** (2006.01)

(86) Numéro de dépôt international:
**PCT/EP2016/059066**

(87) Numéro de publication internationale:
**WO 2016/170146 (27.10.2016 Gazette 2016/43)**

(54) **MATÉRIAU ET SON PROCÉDÉ D'OBTENTION**

MATERIAL UND SEIN ERZEUGUNGSVERFAHREN

MATERIAL AND METHOD FOR OBTAINING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2015 EP 15305635**

(43) Date de publication de la demande:
**28.02.2018 Bulletin 2018/09**

(73) Titulaires:
- **Avril**
  **75008 Paris (FR)**
- **CENTRE NATIONAL DE LA RECHERCHE SCIENTIFIQUE (C.N.R.S.)**
  **75016 Paris (FR)**
- **Université Paris-Est Créteil Val de Marne**
  **94000 Créteil (FR)**

(72) Inventeurs:
- **THEVENIEAU, France**
  **28000 Chartres (FR)**
- **MANGEON, Carine**
  **94700 Maison Alfort (FR)**
- **RENARD, Estelle**
  **92340 Bourg La Reine (FR)**
- **LANGLOIS, Valérie**
  **94230 Cachan (FR)**

(74) Mandataire: **LLR**
**11, boulevard de Sébastopol**
**75001 Paris (FR)**

(56) Documents cités:
**WO-A2-02/16627 DE-A1-102011 012 869**

- **DO YOUNG KIM ET AL: "Poly(3-mercaptopropionate): A Nonbiodegradable Biopolymer?", BIOMACROMOLECULES, vol. 6, no. 2, 1 mars 2005 (2005-03-01), pages 897-901, XP055223663, US ISSN: 1525-7797, DOI: 10.1021/bm049334x**

EP 3 286 254 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un matériau et son procédé d'obtention.

Les polyhydroxyalcanoates ou PHA sont des polyesters biodégradables produits naturellement par fermentation bactérienne de substrats carbonés (sucres, lipides...). Les PHA sont produits par les bactéries en tant que matériaux de stockage de carbone et d'énergie.

La famille des polyhydroxyalcanoate regroupe plus de 150 monomères différents qui conduisent à des propriétés parfois très différentes.

Ces polymères peuvent ainsi présenter des propriétés thermoplastiques ou d'élastomères avec des points de fusion variant de 40 à 180 °C.

La plus connue des caractéristiques des PHA est leur biodégradabilité, le fait que ces polymères soient compostables. Conçus à partir de ressources renouvelables, ils se dégradent naturellement en quelques semaines ou quelques mois une fois placés dans les conditions appropriées. Cet aspect, doublé du fait qu'ils rassemblent une large part des propriétés des plastiques conventionnels, confère un avantage compétitif majeur aux PHA dans le marché des plastiques.

De nombreuses caractéristiques physico-chimiques des PHAs font d'eux des biopolymères de premier ordre. Leur température de fusion élevée leur permet d'être employés à des applications inaccessibles à d'autres bioplastiques. Leur capacité de présenter une barrière à différents gaz, notamment à l'oxygène, est supérieure à la plupart des polymères conventionnels, les élevant ainsi au titre de candidats idéaux pour les applications d'emballage alimentaire. De plus, les PHAs résistent à plusieurs produits chimiques, présentent différentes possibilités de transformation (extrusion, thermoformage, etc. souvent avec les mêmes équipements que les plastiques conventionnels), possèdent un haut poids moléculaire, résistent à l'humidité, peuvent être colorés, sont imprimables, et plus encore.

Bien qu'ils soient biodégradables, les PHA à courtes chaînes latérales sont des polymères cassants, du fait d'une faible déformation à la rupture. Une telle propriété n'est donc pas avantageuse pour les différentes applications industrielles envisagées.

Aussi, il existe un besoin de palier cet inconvénient.

Les PHA ont déjà été utilisés par exemple dans la demande DE102011012869 en tant que plastifiants pour l'élaboration d'un matériau thermoplastique élastomère à base de caoutchouc. Toutefois, ce document ne permet pas de fournir un matériau modifiant les caractéristiques des PHA.

Un des buts de l'invention est de fournir un matériau à caractère biodégradable essentiellement constitué de PHA, et biosourcé, plus résistant et moins cassant que ceux connus de l'état de la technique.

Un autre but de l'invention est de fournir un procédé permettant d'obtenir un tel matériau.

Encore un autre but de l'invention consiste à améliorer les propriétés de polymère en termes de souplesse, d'allongement à la rupture et de stabilité thermique

L'invention concerne un matériau comprenant, ou essentiellement constituée ou constituée d' :

- un premier polymère réticulé formant un réseau, ledit premier polymère étant obtenu par réaction thiol-ène entre

    ◦ une première composition comprenant au moins un premier composé carboné polyinsaturé comprenant au moins une chaine carbonée insaturée, notamment linéaire, et en particulier ramifiée, comprenant au moins 5 atomes de carbone, et
    ◦ au moins un second composé comprenant au moins deux fonctions thiol ou - SH,
    de sorte que

        + si le premier composé polyinsaturé est bi-insaturé, ledit second composé comprend au moins trois fonctions -SH, et
        + si le premier composé polyinsaturé est au moins tri-instauré, ledit second composé comprend au moins deux fonctions -SH,
        et

- un second polymère constitué de n monomères, chacun des monomères ayant la formule I suivante :

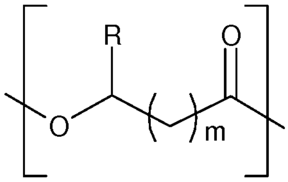

(Formule I)

où m varie de 0 à 4,
R est choisi parmi l'hydrogène et un groupe alkyl, notamment linéaire, en C1-C5, et
n est un entier naturel non nul supérieur ou égal à 100, ou au moins égal à 2 les n monomères étant identiques ou différents

ledit matériau étant tel qu'il forme un réseau semi-interpénétré où le second polymère est enchevêtré dans le réseau du premier polymère.

Le matériau selon l'invention est caractérisé en ce qu'il est constitué d'un polymère réticulé dans lequel est enchevêtré un second matériau : il s'agit donc d'un réseau semi interpénétré.

Par réseau semi interpénétré ou semi-RIP, on entend dans l'invention un réseau réticulé d'un polymère dans lequel est piégé ou enchevêtré un autre polymère qui lui est sous forme linéaire, et donc où l'autre polymère ne forme pas de réseau. Ces réseaux sont à distinguer des réseaux interpénétrés ou RIP dans lesquels les deux polymères sont réticulés et s'enchevêtrent sans former de liaisons covalentes entre eux.

Il est à noter que l'enchevêtrement tel que décrit ci-dessus se distingue des liaisons covalentes qui pourraient être impliquées pour lier lesdits polymères.

Une représentation schématique des réseaux semi-RIP et RIP est donnée aux **Figures 1A et 1B**.

Le matériau selon l'invention est donc composé de deux polymères : un premier polymère réticulé et un second polymère répondant à la formule I.

+ Le second polymère

Le second polymère est composé d'une sous unité ou monomère :

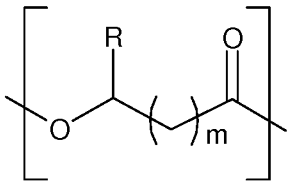

répétée n fois, ou de plusieurs sous unités différentes répétées n fois, ledit polymère pouvant être un homopolymère ou un héteropolymère. Par homopolymère on entend un polymère formé exclusivement de la même sous unité répétée n fois. Par hétéropolymère, on entend un polymère comprenant au moins deux sous unité de structures différentes, mais répondant à la formule 1, qui sont répétées tout au long du polymère, au cours des n répétitions.

Le second polymère peut être constitué d'une ou plusieurs des sous unités ou monomères suivants :

[O-$CH_2$-CO-], ou m=0 et R est un hydrogène,
[O-$CHCH_3$-CO-], où m=0 et R est un groupe -$CH_3$,
[O-$CHC_2H_5$-CO-], où m=0 et R est un groupe -$C_2H_5$,
[O-$CHC_3H_7$-CO-], où m=0 et R est un groupe -$C_3H_7$,
[O-$CHC_4H_9$-CO-], où m=0 et R est un groupe -$C_4H_9$,
[O-$CHC_5H_{11}$-CO-], où m=0 et R est un groupe -$C_5H_{11}$,
[O-$CH_2$-$CH_2$-CO-], ou m=1 et R est un hydrogène,
[O-$CHCH_3$-$CH_2$-CO-], où m=1 et R est un groupe -$CH_3$,
[O-$CHC_2H_5$-$CH_2$-CO-], où m=1 et R est un groupe -$C_2H_5$,
[O-$CHC_3H_7$-$CH_2$-CO-], où m=1 et R est un groupe -$C_3H_7$,
[O-$CHC_4H_9$-$CH_2$-CO-], où m=1 et R est un groupe -$C_4H_9$,
[O-$CHC_5H_{11}$-$CH_2$-CO-], où m=1 et R est un groupe -$C_5H_{11}$,
[O-$CH_2$-$CH_2$-$CH_2$-CO-], ou m=2 et R est un hydrogène,
[O-$CHCH_3$-$CH_2$-$CH_2$-CO-], où m=2 et R est un groupe -$CH_3$,

$[O-CHC_2H_5-CH_2-CH_2-CO-]$, où m=2 et R est un groupe $-C_2H_5$,
$[O-CHC_3H_7-CH_2-CH_2-CO-]$, où m=2 et R est un groupe $-C_3H_7$,
$[O-CHC_4H_9-CH_2-CH_2-CO-]$, où m=2 et R est un groupe $-C_4H_9$,
$[O-CHC_5H_{11}-CH_2-CH_2-CO-]$, où m=2 et R est un groupe $-C_5H_{11}$,
$[O-CH_2-CH_2-CH_2-CH_2-CO-]$, ou m=3 et R est un hydrogène,
$[O-CHCH_3-CH_2-CH_2-CH_2-CO-]$, où m=3 et R est un groupe $-CH_3$,
$[O-CHC_2H_5-CH_2-CH_2-CH_2-CO-]$, où m=3 et R est un groupe $-C_2H_5$,
$[O-CHC_3H_7-CH_2-CH_2-CH_2-CO-]$, où m=3 et R est un groupe $-C_3H_7$,
$[O-CHC_4H_9-CH_2-CH_2-CH_2-CO-]$, où m=3 et R est un groupe $-C_4H_9$,
$[O-CHC_5H_{11}-CH_2-CH_2-CH_2-CO-]$, où m=3 et R est un groupe $-C_5H_{11}$,
$[O-CH_2-CH_2-CH_2-CH_2-CH_2-CO-]$, ou m=4 et R est un hydrogène,
$[O-CHCH_3-CH_2-CH_2-CH_2-CH_2-CO-]$, où m=4 et R est un groupe $-CH_3$,
$[O-CHC_2H_5-CH_2-CH_2-CH_2-CH_2-CO-]$, où m=4 et R est un groupe $-C_2H_5$,
$[O-CHC_3H_7-CH_2-CH_2-CH_2-CH_2-CO-]$, où m=4 et R est un groupe $-C_3H_7$,
$[O-CHC_4H_9-CH_2-CH_2-CH_2-CH_2-CO-]$, où m=4 et R est un groupe $-C_4H_9$, et
$[O-CHC_5H_{11}-CH_2-CH_2-CH_2-CH_2-CO-]$, où m=4 et R est un groupe $-C_5H_{11}$.

Par exemple un polymère [-O-CH2-CO-], est un polymère appelé acide polylactique, un polymère $[-O-CHCH_3-CH_2-CO-]$ est un polymère appelé poly(3-hydroxybutyrate) ou PHB ou P3HB, un polymère $[-O-CHC_5H_{11}-CH_2-CO-]$ est un polymère appelé poly(3-hydroxyoctoate) ou PHO, un polymère $[-O-CHC_2H_5-CH_2-CO-]$ est un polymère appelé poly(3-hydroxyvalerate) ou PHV ou P3HV, et un polymère $[-O-CH_2-CH_2-CH_2-CH_2-CH_2-CO-]$ est un polymère appelé polycaprolactone ou PCL.

Les copolymères $([-O-CHCH_3-CH_2-CO]$ ;$[-O-CHC_2H_5-CH_2-CO-])n$ sont des copolymères de P3HB et de P3HV appelé P3HBHV. Dans le cadre de tels polymères il est possible de déterminer la quantité de chaque sous unité et d'en donner la proportion. Ces proportions sont évaluées par résonnance magnétique nucléaire RMN du proton. La composition est déterminée à partir des intégrations des protons à 5,15-5,25 ppm et l'intégration du groupe méthyle terminal du motif PHB à 0,9 ppm selon l'équation suivante :

$$\%3HV = \frac{I\ 0{,}9\ ppm\ /\ 3}{I\ 5{,}15-5{,}25} * 100$$

Ainsi, lorsque l'on connait la proportion de chacune des sous unités, il est possible d'écrire les proportions dans le nom du polymère. A titre d'exemple, P3HB88HV12 signifie que le polymère (PH3B3HV) comprend 88% d'unité P3HB et 12% d'unité P3HV.

Les seconds polymères qui sont également des polyhydroxyalcanoates ou PHA peuvent également être classés selon la taille ou la longueur de la chaine latérale R. Ainsi, les PHA où R est H, $-CH_3$ ou $-C_2H_5$, quel que soit m, sont des PHA à courtes chaine latérales dits PHA-scl (pour *short chain lengh*-PHA en anglais). Les PHA où R est $-C_3H_7$, $-C_4H_8$ ou $-C_5H_{11}$ quel que soit m, sont des PHA à moyennes chaines latérales dits PHA-mcl (pour *medium chain lengh*-PHA en anglais).

Lorsque la longueur de la chaine latérale R augmente, les PHA sont plutôt ductiles ou maléables.

L'unité de répétition, représentée par la formule I, est répétée n fois, ou n est un entier naturel supérieur à 100. Cela signifie que le second polymère présente au moins 100 sous unités, notamment 100, ou 200, ou 300, ou 400, ou 500, ou 600, ou 700, ou 800, ou 900, ou 1000, ou 2000, ou 3000, ou 4000, ou 5000 ou 6000, ou 7000, ou 8000, ou 9000 ou 10000 sous unités ou plus.

Dans l'invention, il est avantageux que le second polymère ait une masse de 9000 g/mol ou plus. Cela signifie que le second polymère a un masse molaire de 9000, 10000, 11000, 12000, 13000, 14000, 15000, 16000, 17000, 18000, 19000, 20000, 30000, 40000, 50000, 60000, 70000, 80000, 90000 g/mol ou plus.

+ Le premier polymère

Le premier polymère est un polymère réticulé, qui forme un réseau ou un filet. Le réseau est un réseau tridimensionnel qui est obtenu par réaction thiol-ène.

Dans ce cas, dans la première étape, à l'aide d'un initiateur de radicaux (init), on forme un radical sur le soufre. C'est ce radical soufré qui viendra ensuite s'additionner sur la double liaison.

La réaction peut être schématisée comme suit :

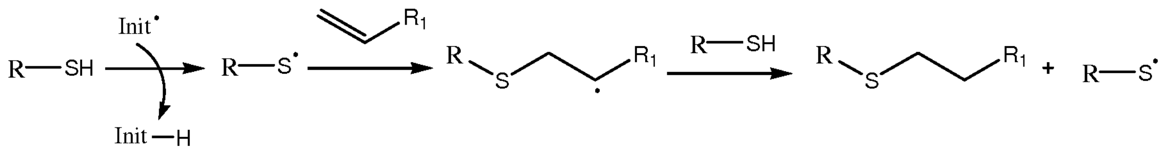

Cette réaction nécessite donc :

- un composé soufré, présentant au moins une fonction thiol -SH, et
- un composé comprenant au moins une insaturation, c'est-à-dire au moins une double liaison C=C.

Dans le cadre de l'invention, le premier polymère qui est sous la forme d'un réseau après réticulation, est composé :

- d'un premier composé carboné polyinsaturé comprenant au moins une chaine carbonée insaturée, notamment linéaire, et en particulier ramifiée, comprenant au moins 5 atomes de carbone, et
- au moins un second composé comprenant au moins deux fonctions thiol ou - SH.

Par « composé carboné polyinsaturé comprenant au moins une chaine carbonée insaturée », on entend dans l'invention un composé chimique présentant au moins deux insaturations, c'est-à-dire au moins deux doubles liaisons C=C.

Le composé carboné, qui comprend essentiellement des atomes de carbone et d'hydrogène, mais qui peut comprendre des atomes d'O, N, d'halogènes..., comprend au moins une chaine carbonée insaturée.

Cela signifie que le composé peut être linéaire (il comprend donc une chaine carbone), mais également cyclique. De préférence, s'il est cyclique il comprend au moins une portion ou radical linéaire insaturé(e).

Avantageusement, au moins une des insaturations C=C se trouve sur ladite au moins une chaine linéaire carbonée.

Des composés répondant à cette définition sont des hydrocarbures polyinsaturés, ayant au moins 5 atomes de carbone, des acides carboxyliques polyinsaturés ayant au moins 5 atomes de carbone, des acides gras polyinsaturés, ou tout hydrocarbure présentant au moins 5 atomes de carbone et pouvant présenter une ou plusieurs fonctions éther, alcool, acide, amine, amide, cétone, ou autre. En outre les composés peuvent être des éthers d'acides carboxyliques, comme les monoacyl glycérol, les diacyl glycérol ou les triacyl glycérols polyinsaturés.

Les composés avantageux sont le polyisoprène ou les acides gras poly insaturés, notamment les acides gras polyinsaturés en C10-C25, ou les monoacyl, diacyl ou triacyl glycérol correspondants.

Les acides gras polyinsaturés en C10-C25 sont des acides gras comprenant une chaine carbonée comprenant 10 atomes de carbone, 11 atomes de carbone, 12 atomes de carbone, 13 atomes de carbone, 14 atomes de carbone, 15 atomes de carbone, 16 atomes de carbone, 17 atomes de carbone, 18 atomes de carbone, 19 atomes de carbone, 20 atomes de carbone, 21 atomes de carbone, 22 atomes de carbone, 23 atomes de carbone, 24 atomes de carbone ou 25 atomes de carbone.

Dans le cas particulier des diacyl glycérol ou des triacyl glycérol, qui possèdent respectivement deux ou trois acides gras, le premier composé selon l'invention sera dit polyinsaturé si au moins deux des acides gras possèdent une insaturation C=C, ou si un des acides gras présente au moins deux insaturations, le ou les autres acides gras ne présentant aucune insaturation C=C. Bien évidemment, si un, deux ou le cas échéant trois des acides gras sont au moins mono insaturés, le premier composé sera dit polyinsaturé.

Afin d'obtenir un premier polymère réticulé formant un réseau, il est important

+ si le premier composé polyinsaturé est bi-insaturés, ledit second composé comprend au moins trois fonctions -SH, et
+ si le premier composé polyinsaturé est au moins tri-instauré, ledit second composé comprend au moins deux fonctions -SH.

Il est avantageux dans l'invention que la proportion du premier composé carboné polyinsaturé représente 40% ou moins en poids par rapport au poids du second polymère.

Plus avantageusement, premier composé carboné polyinsaturé représente de 4% à 40%, en poids par rapport au poids du second polymère, notamment de 10% à 30% en poids par rapport au poids du second polymère, plus particulièrement de 10% à 20% en poids par rapport au poids du second polymère.

Dans l'invention « de 4% à 40% en poids » signifie que le premier composé carboné polyinsaturé peur représenter, par rapport au poids du second polymère, environ 4 %, environ 5 %, environ 6 %, environ 7 %, environ 8 %, environ 9 %, environ 10 %, environ 11 %, environ 12 %, environ 13 %, environ 14 %, environ 15 %, environ 16 %,

environ 17 %, environ 18 %, environ 19 %, environ 20 %, environ 21 %, environ 22 %, environ 23 %, environ 24 %, environ 25 %, environ 26 %, environ 27 %, environ 28 %, environ 29 %, environ 30 %, environ 31 %, environ 32 %, environ 33 %, environ 34 %, environ 35 %, environ 36 %, environ 37 %, environ 38 %, environ 39 % environ 40 %. On entend par « environ » dans les gammes de pourcentage ci-dessus une variation de plus ou moins 10%, c'est-à-dire qu' « environ 10% » s'interprète comme couvrant des valeurs de 9,9% à 10,1%.

Le matériau selon l'invention est préférentiellement obtenu à partir de PHA-scl qui possède des propriétés thermoplastiques. Toutefois, le procédé exposé ci-après peut être applicable à des PHA à moyennes chaînes latérales, ou PHA-mcl tels que le PHO. Cependant, étant données ses propriétés élastiques, les résultats ne seront pas aussi intéressants.

Afin de déterminer si le matériau obtenu forme bien un réseau semi interpénétré, les techniques suivantes sont utilisables. Les techniques de microscopie électronique à balayage (MEB) révèlent des informations sur la taille, la forme et la continuité des domaines mais ces études ne permettent pas de connaître la composition des partenaires dans les différentes phases.

L'analyse enthalpique différentielle (DSC) et l'analyse mécanique dynamique (DMA) peuvent fournir des informations sur la composition de chaque phase et leur degré d'interpénétration au travers des décalages et des élargissements des températures de transition vitreuse (Tg) des polymères impliqués. Si les deux Tg sont distinctes, les polymères sont considérés comme immiscibles. Cela se traduit par une macroséparation de phase avec des domaines compris entre 500 nm à 3 $\mu$m pour les semi-RIP. Lorsqu'une Tg unique est observée (intermédiaire entre celles des précurseurs, les polymères sont miscibles et la séparation de phases est restreinte dans ces systèmes.

La turbidité peut être également considérée comme un paramètre permettant d'évaluer le degré d'interpénétration des chaînes et la taille des micro-domaines, à condition que les indices de réfraction des deux partenaires soient suffisamment différents.

Avantageusement, l'invention concerne un matériau susmentionné, dans lequel ledit premier composé est un triglycéride au moins bi-insaturé, ou un polyisoprène, des acides gras essentiels, ou des terpènes, notamment du carotène, du farnésène, du lycopène, du phytoène, du linalol ou du geraniol.

Les différents composés susmentionnés sont tous polyinsaturés et comprennent une chaine carbonée d'au moins 5 atomes de carbone.

Par « un triglycéride au moins bi-insaturé » on entend dans l'invention un triglycéride dont au moins un des acides gras comporte au moins deux insaturations ou au moins deux des acides gras comportent au moins une insaturations.

Par acides gras essentiels, on entend dans l'invention notamment l'acide linoléique, l'acide $\alpha$-linolénique, l'acide arachidonique, l'acide eicosapentaénoïque, L'acide docosahexaénoïque.

Avantageusement, le premier composé est compris dans une composition comprenant un ou plusieurs triglycérides au moins bi-insaturé.

Aussi, dans un mode de réalisation avantageux, l'invention concerne un matériau susmentionné, comprenant, ou essentiellement constitué, ou constitué,

- d'un premier polymère réticulé formant un réseau, ledit premier polymère étant obtenu par réaction thiol-ène entre

    ◦ une composition comprenant un ou plusieurs triglycérides au moins bi-insaturé, notamment linéaire, et en particulier ramifiée, comprenant au moins 5 atomes de carbone, et
    ◦ au moins un second composé comprenant au moins deux fonctions thiol ou - SH,
    de sorte que

        + si le premier composé polyinsaturé est bi-insaturés, ledit second composé comprend au moins trois fonctions -SH, et
        + si le premier composé polyinsaturé est au moins tri-instauré, ledit second composé comprend au moins deux fonctions -SH,

  et
- un second polymère constitué de n monomères, chacun des monomères ayant la formule I suivante :

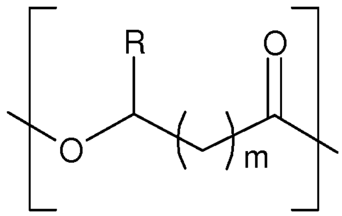

(Formule I)

où m varie de 0 à 4,
R est choisi parmi l'hydrogène et un groupe alkyl, notamment linéaire, en C1-C5, et
n est un entier naturel non nul supérieur ou égal à 100, ou au moins égal à 2,
les n monomères étant identiques ou différents

lesdits monomères étant choisis parmi les monomères suivants :

[O-$CH_2$-CO-], [O-$CHCH_3$-CO-], [O-$CHC_2H_5$-CO-] [O-$CHC_3H_7$-CO-], [O-$CHC_4H_9$-CO-], [O-$CHC_5H_{11}$-CO-], [O-$CH_2$-$CH_2$-CO-], [O-$CHCH_3$-$CH_2$-CO-], [O-$CHC_2H_5$-$CH_2$-CO-], [O-$CHC_3H_7$-$CH_2$-CO-], [O-$CHC_4H_9$-$CH_2$-CO-], [O-$CHC_5H_{11}$-$CH_2$-CO-], [O-$CH_2$-$CH_2$-$CH_2$-CO-], [O-$CHCH_3$-$CH_2$-$CH_2$-CO-], [O-$CHC_2H_5$-$CH_2$-$CH_2$-CO-], [O-$CHC_3H_7$-$CH_2$-$CH_2$-CO-], [O-$CHC_4H_9$-$CH_2$-$CH_2$-CO-], [O-$CHC_5H_{11}$-$CH_2$-$CH_2$-CO-], [O-$CH_2$-$CH_2$-$CH_2$-$CH_2$-CO-], [O-$CHCH_3$-$CH_2$-$CH_2$-$CH_2$-CO-], [O-$CHC_2H_5$-$CH_2$-$CH_2$-$CH_2$-CO-], [O-$CHC_3H_7$-$CH_2$-$CH_2$-$CH_2$-CO-], [O-$CHC_4H_9$-$CH_2$-$CH_2$-$CH_2$-CO-], [O-$CHC_5H_{11}$-$CH_2$-$CH_2$-$CH_2$-CO-], [O-$CH_2$-$CH_2$-$CH_2$-$CH_2$-$CH_2$-CO-], [O-$CHCH_3$-$CH_2$-$CH_2$-$CH_2$-$CH_2$-CO-], [O-$CHC_2H_5$-$CH_2$-$CH_2$-$CH_2$-$CH_2$-CO-], [O-$CHC_3H_7$-$CH_2$-$CH_2$-$CH_2$-$CH_2$-CO-], [O-$CHC_4H_9$-$CH_2$-$CH_2$-$CH_2$-$CH_2$-CO-] ou [O-$CHC_5H_{11}$-$CH_2$-$CH_2$-CO-$CH_2$-$CH_2$-],
ledit matériau étant tel qu'il forme un réseau semi-interpénétré où le second polymère est enchevêtré dans le réseau du premier polymère.

Par « enchevêtré » on entend dans l'invention que le premier polymère et le second polymère sont mêlés l'uns à l'autres d'une façon désordonnée.

Avantageusement, l'invention concerne le matériau susmentionné dans lequel proportion du premier composé carboné polyinsaturé représente 40% ou moins en poids par rapport au poids du second polymère.

Plus avantageusement, premier composé carboné polyinsaturé représente de 4% à 40%, en poids par rapport au poids du second polymère, notamment de 10% à 30% en poids par rapport au poids du second polymère, plus particulièrement de 10% à 20% en poids par rapport au poids du second polymère

Avantageusement, l'invention concerne un matériau susmentionné, où ladite première composition comprend au moins un premier composé carboné polyinsaturé comprenant au moins une chaine carbonée insaturée est une composition comprenant ou constituée d'une ou plusieurs huiles choisie parmi les huiles végétales, les huiles de poisson, et les huiles microbiennes issues de microorganismes dits oléagineux, notamment une huile végétale telles que l'huile de colza, l'huile de colza oléique, l'huile de tournesol, l'huile de tournesol oléique, l'huile de coco, l'huile de palme, l'huile palmiste, l'huile d'olive, l'huile d'arachide, l'huile de soja, l'huile de mais, l'huile de moutarde, l'huile de ricin, l'oléine de palme, la stéarine de palme, l'huile de carthame, l'huile de sésame, l'huile de lin, l'huile de noix, l'huile de pépins de raison, l'huile de chanvre ou un sous-produit issus de l'extraction de celles-ci comprenant au moins 30% d'un mélange d'acides gras, comme les eaux d'estérifications, les fonds de bacs, les condensats de désodorisation, les eaux de lavages ou les pates de neutralisation,

- les huiles de poissons, notamment de poissons gras, et
- les huiles microbiennes issues de microorganismes dits oléagineux, c'est-à-dire capables de stocker des acides gras à plus de 20% de leur poids sec, issus de levures, bactéries, champignons ou micro-algues.

Ces exemples d'huile sont donnés à titre indicatif et ne sauraient limiter la portée de l'invention.

Dans l'invention, on entend par huile végétale, un corps gras extrait d'une plante oléagineuse.

On entend par plante oléagineuse toutes plantes dont les graines, les noix ou les fruits contiennent des lipides.

Un corps gras est une substance composée de molécules ayant des propriétés hydrophobes. Les corps gras sont majoritairement composés d'acides gras et de triglycérides qui sont des esters constitués d'une molécule de glycérol et de trois acides gras. Les autres composants forment ce que l'on appelle l'insaponifiable.

L'extraction de l'huile végétale par des méthodes traditionnelles nécessite souvent diverses opérations préliminaires, telles que le décorticage. Après ces opérations, la culture est broyée en une pâte. La pâte, ou parfois le fruit entier, est bouillie en présence d'eau et sous agitation jusqu'à séparation de l'huile. Ces méthodes traditionnelles ont

un faible taux d'efficacité.

Les méthodes modernes de récupération de l'huile comprennent des étapes de cassage et de pressage, ainsi que la dissolution dans un solvant, le plus souvent l'hexane. L'extraction de l'huile avec un solvant est une méthode plus efficace que le pressage. Le résidu laissé après l'extraction de l'huile (tourteaux ou farine) est utilisé comme aliment pour animaux.

Les huiles végétales brutes sont obtenues sans traitement supplémentaire autre que le dégommage ou la filtration. Pour les rendre propres à la consommation humaine, les huiles végétales comestibles sont raffinées pour éliminer les impuretés et substances toxiques, un processus impliquant le blanchiment, la désodorisation et le refroidissement. Les huiles envisagées dans l'invention végétales comprennent les huiles brutes, raffinées ou fractionnées ou les co-produits issus de l'extraction des huiles.

À quelques exceptions près, et contrairement aux graisses animales, les huiles végétales contiennent des acides gras majoritairement insaturés de deux sortes: monoinsaturés (comme l'acide palmitique, l'acide oléique ou l' acide érucique) et polyinsaturées (comme l'acide linoléique).

Dans un autre mode de réalisation avantageux, l'invention concerne un matériau susmentionné, dans lequel le second polymère est un polymère de polyhydroxyalcanoate à courtes chaines latérales ou PHA-scl, constitué de n monomères de formule I où m varie de 1 à 3,

R est choisi parmi l'hydrogène, un groupe éthyle et un groupe méthyle, et

n est un entier naturel non nul, supérieur ou égal à 100,

lesdits PHA-scl étant notamment des poly-3-hydroxybutyrate ou PHB et/ou des poly(3-hydroxybutyrate-co-3-hydroxyvalerate) ou PHBHV.

Ces matériaux sont particulièrement avantageux dans la mesure où ils possèdent de bonnes propriétés élastiques comme cela est détaillé dans les exemples suivants.

Dans un autre mode de réalisation avantageux, l'invention concerne un matériau susmentionné, dans lequel le composé comprenant au moins deux fonctions -SH est choisi parmi les composés suivants :

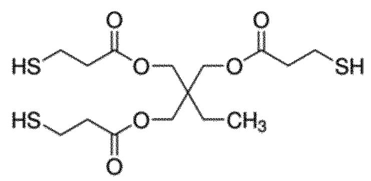

le Triméthylolpropane tris(3-mercaptopropionate),

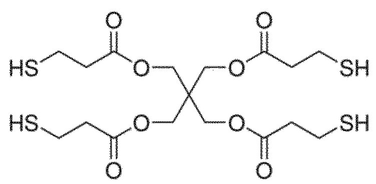

le pentaérythritol tetrakis(3-mercaptopropionate).

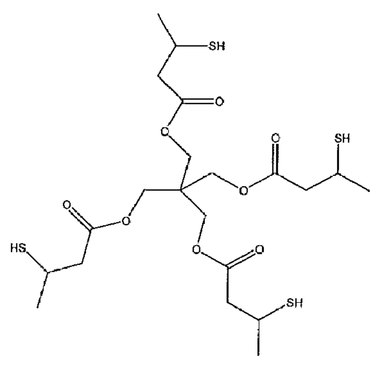

le pentaerythritol tetrakis(3-mercaptobutyrate),

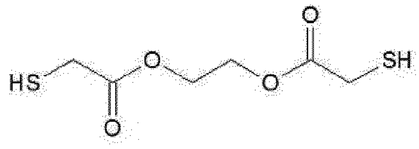

le glycol dimercaptoacetate, et

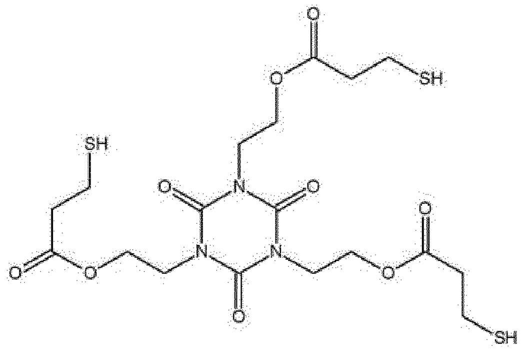

le tris[2-(3 mercaptopropionyloxy)ethyl]isocyanurate.

Plus le deuxième composé comprendra de fonctions thiol, plus le réseau sera réticulé, c'est-à-dire plus les mailles seront nombreuses. De même, plus les fonctions thiol seront éloignées sur le squelette du second composé, plus le maillage sera large.

D'autres polythiols connus de l'homme du métier son bien entendu utilisables dans le cadre de l'invention.

Dans un autre mode de réalisation avantageux, l'invention concerne un matériau susmentionné, dans lequel le premier composé, ou la composition comprenant ledit premier composé, représente de 4 à 20% en poids du poids total du matériau.

Les inventeurs ont pu montrer que pour conférer des propriétés élastiques, ou plastiques, aux PHA, il était suffisant d'ajouter de 4 à 20% de composé polyinsaturé susmentionné. La réticulation en présente du second composé ayant des fonctions thiols sera alors possible et le matériau final aura donc environ 4% à environ 20% en poids de composé polyinsaturé par rapport au poids total du matériau.

L'invention concerne en outre un procédé de préparation d'un matériau, notamment tel que défini précédemment,
ledit procédé comprenant

a) le mélange:

- d'une première composition comprenant au moins un premier composé carboné polyinsaturé comprenant au moins une chaine carbonée insaturée, avec
- au moins un composé comprenant au moins deux fonctions -SH,
- au moins un amorceur radicalaire,
- et moins un polymère constitué de n monomères, chacun des monomères ayant la formule I suivante :

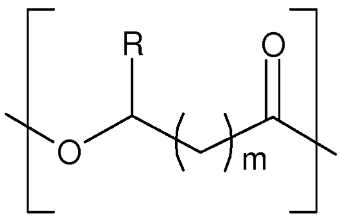

(Formule I)

où m varie de 0 à 4,
R est choisi parmi l'hydrogène, un groupe éthyle et un groupe alkyl, notamment linéaire, en C1-C5, et
n est un entier naturel non nul supérieur ou égal à 100, ou au moins égal à 2 les n monomères étant identiques ou différents

pour obtenir une composition initiale,
et

b) une étape de réticulation du premier polymère entre ledit au moins un composé carboné polyinsaturé comprenant au moins une chaine carbonée insaturée et le composé comprenant au moins deux fonctions -SH.
Avantageusement, l'invention concerne un procédé de préparation d'un matériau tel que défini précédemment, ledit procédé comprenant
c) le mélange:

- d'une première composition comprenant au moins un premier composé carboné polyinsaturé comprenant au moins une chaine carbonée insaturée, avec
- au moins un composé comprenant au moins deux fonctions -SH,
- au moins un amorceur radicalaire,
- et moins un polymère constitué de n monomères, chacun des monomères ayant la formule I suivante:

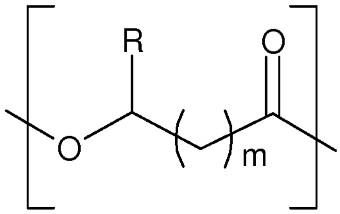

(Formule I)

où m varie de 0 à 4,
R est choisi parmi l'hydrogène, un groupe éthyle et un groupe alkyl, notamment linéaire, en C1-C5, et
n est un entier naturel non nul, au moins égal à 2,
les n monomères étant identiques ou différents
pour obtenir une composition initiale,
et

d) une étape de réticulation du premier polymère entre ledit au moins un composé carboné polyinsaturé comprenant au moins une chaine carbonée insaturée et le composé comprenant au moins deux fonctions -SH,

la quantité dudit premier composé carboné polyinsaturé représentant 40% ou moins en poids par rapport au poids dudit polymère constitué de n monomères de formule I, notamment de 4% à 30%, en particulier de 10 à 20% en poids par rapport au poids dudit polymère constitué de n monomères de formule I.

Le procédé selon l'invention est simple, rapide, et très efficace en terme de rendement. En effet, les inventeurs ont montré que la simple mise en contact des différents composants du premier polymère en présence du second polymère avec un amorceur radicalaire permettant une réticulation du premier polymère, le résultat étant que le second polymère se retrouve enchevêtré dans le réseau du premier polymère. Le matériau ainsi obtenu est un réseau semi-interpénétré.

La réaction de réticulation du premier polymère est initiée par un amorceur radicalaire. Un amorceur radicalaire est une espèce capable de former des radicaux. Ces substances possèdent généralement des liaisons chimiques faibles, c'est-à-dire des liaisons qui ont une faible énergie de dissociation homolytique par photolyse ou thermolyse par exemple.

La réaction est réalisée à température ambiante, c'est-à-dire dans une gamme de température variant notamment d'environ 16°C à environ 28°C, notamment d'environ 19°C à environ 22°C.

Les amorceurs selon l'invention sont notamment des amorceurs photochimiques capables de générer des radicaux sous l'action de rayonnements lumineux, notamment des rayonnements ultraviolets (UV).

L'amorceur radicalaire peut être également un amorceur redox pour lesquels la production de radicaux résulte d'une réaction d'oxydoréduction: système eau oxygénée/ion ferreux.

L'amorceur radicalaire peut également être thermique tels que les amorceurs azoïques (ex: 2,2'-azobisisobutyronitrile), peroxydes organiques (ex : peroxyde de tertio-butyle, hydroperoxyde de cumyle). Les radicaux sont libérés par décomposition thermique.

Dans la première étape, à l'aide d'un initiateur de radicaux (init), on forme un radical sur le soufre. C'est ce radical soufré qui viendra ensuite s'additionner sur la double liaison.

La réaction peut être schématisée comme suit :

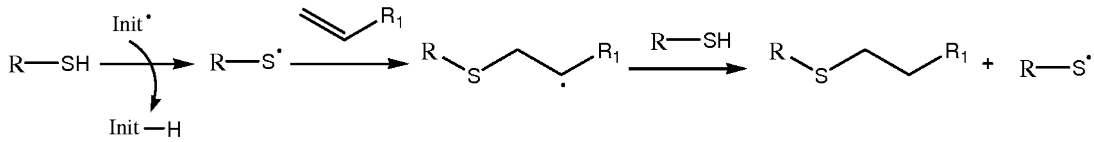

Dans le cadre du procédé selon l'invention, si le premier et le second polymère sont à l'état liquide, il suffit de les mélanger. Par contre lorsque l'un ou les deux polymères sont à l'état solide, ou que l'un d'eux est à l'état solide et l'autre à l'état liquide, il peut être nécessaire pour les mélanger d'effectuer une extrusion. On notera qu'il n'est pas avantageux dans le cas d'une extrusion d'utiliser un amorceur radicalaire thermoactivable, car la polymérisation du premier polymère risque de débuter lors de l'extrusion.
Une alternative est la solubilisation du ou des polymères solides dans un solvant approprié afin d'obtenir un mélange homogène des deux polymères, où les deux polymères peuvent se mélanger. Dans ce cas, il sera nécessaire, avant l'initiation de la réaction thiol-ène d'éliminer le solvant, par exemple par évaporation. Des solvants utilisables, sans être limitatifs, sont le dichlorométhane, le chloroforme ou le tétrahydrofurane.
Dans certains modes de réalisation avantageux, la première composition sert de solvant audit polymère constitué de n monomères. Il ne sera donc pas nécessaire d'ajouter un solvant à la réaction.
Aussi, avantageusement, l'invention concerne un procédé tel que défini précédemment dans lequel, à l'étape a) on ajoute un solvant approprié, et dans lequel après l'étape a), on élimine le solvant avant l'étape b).
En d'autres termes, l'invention concerne avantageusement un procédé de préparation d'un matériau, notamment tel que défini précédemment,
ledit procédé comprenant

a) le mélange:

a. d'une première composition comprenant au moins un premier composé carboné polyinsaturé comprenant au moins une chaine carbonée insaturée, avec
b. au moins un composé comprenant au moins deux fonctions -SH,
c. éventuellement au moins un solvant,
d. au moins un amorceur radicalaire,
e. et moins un polymère constitué de n monomères, chacun des monomères ayant la formule I suivante:

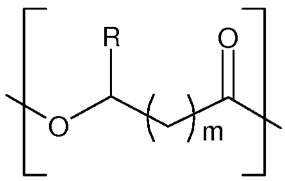

(Formule I)

où m varie de 0 à 4,
R est choisi parmi l'hydrogène, un groupe éthyle et un groupe alkyl, notamment linéaire, en C1-C5, et
n est un entier naturel non nul supérieur ou égal à 100
les n monomères étant identiques ou différents,
pour obtenir une composition initiale,

b) une étape d'élimination dudit solvant de la composition initiale, et
c) une étape de réticulation du premier polymère entre ledit au moins un composé carboné polyinsaturé comprenant au moins une chaine carbonée insaturée et le composé comprenant au moins deux fonctions -SH.

L'invention concerne avantageusement un procédé de préparation d'un matériau, notamment tel que défini précédemment,
ledit procédé comprenant

a) le mélange:

a. d'une première composition comprenant au moins un premier composé carboné polyinsaturé comprenant au moins une chaine carbonée insaturée, avec

b. au moins un composé comprenant au moins deux fonctions -SH,
c. éventuellement au moins un solvant,
d. et moins un polymère constitué de n monomères, chacun des monomères ayant la formule I suivante:

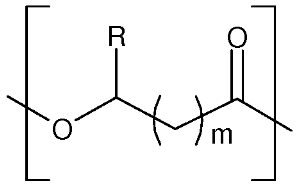

(Formule I)

où m varie de 0 à 4,
R est choisi parmi l'hydrogène, un groupe éthyle et un groupe alkyl, notamment linéaire, en C1-C5, et
n est un entier naturel non nul supérieur ou égal à 100
les n monomères étant identiques ou différents,
pour obtenir une composition initiale,

b) une étape d'extrusion de la composition initiale, et
c) une étape de réticulation du premier polymère entre ledit au moins un carboné polyinsaturé comprenant au moins une chaine carbonée insaturée et le composé comprenant au moins deux fonctions -SH.

Avantageusement, l'invention concerne un matériau comprenant, ou essentiellement constituée ou constituée d' :

- un premier polymère réticulé formant un réseau, ledit premier polymère étant obtenu par réaction thiol-ène entre

  ◦ une première composition comprenant au moins un premier composé carboné polyinsaturé comprenant au moins une chaine carbonée insaturée, notamment linéaire, et en particulier ramifiée, comprenant au moins 5 atomes de carbone, et
  ◦ au moins un second composé comprenant au moins deux fonctions thiol ou - SH,
  de sorte que

    + si le premier composé polyinsaturé est bi-insaturés, ledit second composé comprend au moins trois fonctions -SH, et
    + si le premier composé polyinsaturé est au moins tri-instauré, ledit second composé comprend au moins deux fonctions -SH,
    et

- un second polymère constitué de n monomères, chacun des monomères ayant la formule I suivante :

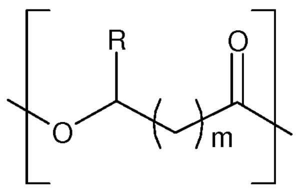

(Formule I)

où m varie de 0 à 4,
R est choisi parmi l'hydrogène et un groupe alkyl, notamment linéaire, en C1-C5, et
n est un entier naturel non nul supérieur ou égal à 100 ou au moins égal à 2,

ledit matériau étant tel qu'il forme un réseau semi-interpénétré où le second polymère est enchevêtré dans le réseau du premier polymère,
ledit procédé étant tel que décrit ci-dessus.

Dans un mode de réalisation avantageux, l'invention concerne un procédé susmentionné, dans lequel l'amorceur radicalaire est un amorceur radicalaire photochimique, notamment choisi parmi :

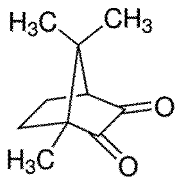

la camphorquinone,

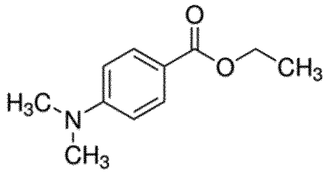

l'éthyl 4-diméthylaminobenzoate, et

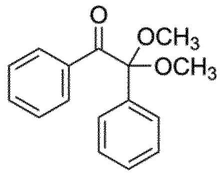

le 2,2-diméthoxy-2-phénylacétophénone.

Dans un mode de réalisation avantageux, l'invention concerne un procédé susmentionné, dans lequel ladite composition comprenant au moins un premier composé carboné polyinsaturé comprenant au moins une chaine carbonée insaturée est une composition comprenant ou constituée d'une ou plusieurs huiles choisie parmi les huiles végétales, les huiles de poisson, et les huiles microbiennes issues de microorganismes dits oléagineux, notamment une huile végétale telles que l'huile de colza, l'huile de colza oléique, l'huile de tournesol, notamment une huile de colza et/ou une huile de tournesol. Les différentes huiles susmentionnées sont également utilisables.

Avantageusement, l'invention concerne un procédé susmentionné, où la première composition comprenant ledit premier composé, représente de 4 à 20% en poids par rapport au poids total de la composition initiale.

Avantageusement, l'invention concerne un procédé susmentionné, dans lequel le second polymère est un polymère de polyhydroxyalcanoate à courtes chaînes latérales ou PHA-scl, de formule I où m varie de 1 à 3,
R est choisi parmi l'hydrogène, un groupe éthyle et un groupe méthyle, et
n est un entier naturel non nul supérieur ou égale à 100,
lesdits PHA-scl étant notamment des poly-3-hydroxybutyrate ou PHB et/ou des poly(3-hydroxybutyrate-co-3-hydroxyvalerate) ou PHBHV.

Dans un mode de réalisation encore plus avantageux, l'invention concerne un procédé susmentionné, dans lequel l'étape a) consiste en la mise en contact, pendant 15 à 30 minutes, notamment pendant environ 20 à 25 minutes, dans un récipient approprié, une composition comprenant de l'huile de colza et/ou de tournesol avec

- du Triméthylolpropane tris(3-mercaptopropionate),
- du poly(3-hydroxybutyrate) et/ou du poly(3-hydroxybutyrate-co-3-hydroxyvalerate), et
- du 2,2-diméthoxy-2-phénylacétophénone,
- un solvant, notamment du dichlorométhane,

pour former la composition initiale.

En outre, à l'étape b) l'amorceur radicalaire est avantageusement un amorceur radicalaire photochimique activable aux UV.

Avantageusement, dans le procédé susmentionné à l'étape b) le rayonnement UV est émis par une lampe Hamamatsu LC8 (L8251), avec une longueur d'onde de 250 à 450 nm. Le rayonnement UV est avantageusement appliqué à la composition initiale avec une intensité à la surface de l'échantillon égale à environ $9mW.cm^2$ pendant environ 200 à environ 500 secondes.

Cette activation radicalaire est courte ce qui rend le procédé très avantageux. Une fois activée, la réaction, de polymérisation du premier polymère va se propager et former un réseau réticulé dans lequel sera interpénétré le second polymère.

L'invention concerne en outre un matériau susceptible d'être obtenu par le procédé tel que défini précédemment.

Avantageusement, le matériau susmentionné est susceptible d'être obtenu par mélange d'un premier polymère obtenu par la polymération ou réticulation selon la réaction thiol-ène, entre une une ou plusieurs huiles comprenant un ou plusieurs acides gras poly insaturés comme l'acide liolénique, l'acide linoléique, ou encore l'acide arachidonique, acide calendique, acide oléostéarique, acide eicosapentaénoïque, acide docosahexaénoïque ou plusieurs acides gras mono insaturés comme l'acide ricinoléique, acide palmitoléique, acide oléique, acide nervonique, acide érucique, ou un mélange de ceux-ci. Avantageusement, lesdits acides gras mono ou polyinsaturés sont sous forme de mono acyl glycérol, diacyl glycérol ou triacyl glycérol.

La nature et la composition de l'huile ou du mélange d'huiles utilisé confèrera des propriétés de réticulations différentes du premier polymère.

Dans l'invention, suite à la mise en oeuvre du procédé susmentionné, les inventeurs ont pu obtenir des matériaux sous forme de films d'épaisseurs moyenne d'environ 200$\mu$m. L'épaisseur du matériau dépendra de la quantité de matière introduite.

L'invention concerne en outre l'utilisation d'un matériau tel que défini précédemment, pour la préparation de contenant alimentaires biodégradables et/ou compostables, d'emballages, de revêtements, notamment de revêtements de surfaces, pour la préparation de pièces injectées ou fabriquées par extrusion ou pour la préparation de revêtements de surfaces, notamment pour la fabrication de revêtement intérieurs pour véhicules, ou encore pour la préparation de textiles ou de cordages.
Le matériau selon l'invention peut être utilisé pour la fabrication :

- d'emballages utilisés dans l'agroalimentaire tel que la préparation de films étirables et rétractables pour fardelage et palettisation (dont les films et housses rétractables), de sacs et sachets, de boitages, de récipients souples, tubes, flacons, embouts, barquettes, bouchons vissés ou encliquetés ou à charnière et joints de bouchons, , calages, plateaux, caisses et casiers réutilisations, vaisselle jetables, alvéoles, feuilles pour thermoformage, films et sachets transparents, capes, flaconnage, plats réchauffages, pots, seaux, emballage réutilisables, bouteilles, biberons, pailles à boire et boitiers pour maquillage,
- de produits industriels, en câblerie, pour préparer des géomembranes, des films d'étanchéité, et aussi sous forme de tuyaux ou tubes ou pour la fabrication de mélanges maîtres,
- extrusion couchage sur papier, carton ou feuille d'aluminium
- utilisés en agriculture pour fabriquer du paillage, les serres, l'ensilage ou encore les tunnels,
- dans l'industrie pour un procédé d'extrusion-gonflage employé pour la fabrication de très grandes séries d'objets divers. Le matériau tel que défini précédemment peut être utilisé dans les jouets, pour le conditionnement de produits pharmaceutiques ou d'hygiènes liquides ou solides, des détergents liquides tensio-actifs ou non, des produits cosmétiques liquides ou pâteux, et en mélange pour les bouteilles de lait pasteurisé,
- en tant que revêtements de sols, ou revêtements du type plafonds type plafonds tendus,
- dans le domaine de la construction automobile notamment pour fabriquer les pare-chocs, les tableaux de bord, l'habillage de l'habitacle et les réservoirs d'essence et de liquide de frein,
- dans l'industrie textile, pour la fabrication de tissus d'ameublement, de vêtements professionnels jetables (combinaisons de peinture, charlottes, masques chirurgicaux, etc.), de sacs tissés à haute résistance et de géotextiles. Le matériau peut être également utilisé en complément dans les cordages et les tapis synthétiques ou comme adjuvant dans les mélanges en béton pour augmenter las propriétés de surface du béton.

L'invention concerne en outre matériau tel que défini précédemment pour son utilisation en chirurgie humaine ou animale.

Dans le domaine médical, le matériau selon l'invention peut être un matériau résorbable tel que les matériels de suture, les implants, ou en tant que matériau pour l'encapsulation de substances actives médicamenteuses ou non.

Dans le domaine médical, le matériau selon l'invention peut être utilisé pour fabriquer des matériaux résorbables pour des matériels de suture, des implants, ou pour l'encapsulation de substances actives.

L'invention concerne en outre l'utilisation du matériau tel que défini dans le cadre de la fabrication de matériels et matériaux à usage médical, pour l'homme ou l'animal.

L'invention sera mieux comprise à la lumière des figures et des exemples qui suivent :

**Légende des figures**

Les **figures 1A et 1B** figure 1 représentent schématiquement les réseaux interpénétrés (Figure 1A) et semi interpénétrés (Figure 1B).

La **figure 2** représente schématiquement la structure d'un réseau semi-RIP PHA/huile/trithiol. A représente un triglycéride de l'huile, B représente un trithiol et C représente une chaine de PHA linéaire.

La **figure 3** représente les courbes de traction obtenues sur différents échantillons : A : de PHBHV seul, B : de PHBHV + 10% d'huile, C : de PHBHV + 20% d'huile, D : de PHBHV + 30% d'huile et E : de PHBHV + 40% d'huile. L'axe des abscisses représente la déformation en % et l'axe des ordonnées représente la contrainte en MPa.

La **figure 4** représente les courbes de traction obtenues sur différents échantillons : A : de PHB seul, B : de PHB + 10% d'huile sans réticulation, C : de PHB + 20% d'huile réticulée, et D : de PHB + 20% d'huile réticulée. L'axe des abscisses représente la déformation en % et l'axe des ordonnées représente la contrainte en MPa.

La **figure 5** représente les courbes de traction obtenues sur différents échantillons : A : de PCL seul, B : de PCL + 10% d'huile réticulée, C : de PCL + 20% d'huile réticulée, D : de PCL + 10% d'huile non réticulée, et E : de PCL + 20% d'huile non réticulée. L'axe des abscisses représente la déformation en % et l'axe des ordonnées représente la contrainte en MPa.

La **figure 6** représente les courbes de traction obtenues sur différents échantillons : A : de PLA seul, B : de PLA + 10% d'huile réticulée, et C : de PLA + 20% d'huile réticulée. L'axe des abscisses représente la déformation en % et l'axe des ordonnées représente la contrainte en MPa.

La **figure 7** représente les courbes d'une analyse thermique par thermogravimétrie (ATG, ou TGA en anglais) pour différents produits : A : huile de tournesol, B : huile de tournesol réticulée, C : réseau PHB + huile de tournesol, et D : PHB seul. L'axe des abscisses représente la température en °C et l'axe des ordonnées représente la perte de masse en %.

La **figure 8** représente les courbes de traction obtenues sur différents échantillons : A : de PHBHV seul, B : de PHBHV + 10% de polyisoprène réticulé, C : de PHBHV + 20% de polyisoprène réticulé, D : de PHBHV + 30% de polyisoprène réticulé et E : de PHBHV + 40% de polyisoprène réticulé. L'axe des abscisses représente la déformation en % et l'axe des ordonnées représente la contrainte en MPa.

Les **figures 9A et 9B** représentent une comparaison de films obtenus avec du PHB.

La figure 9A représente une photographie d'un film obtenu à partir de 100% PHB sous presse chauffante.

La figure 9B représente une photographie d'un Réseau semi-RIP PHB/linalol/trithiol obtenu par presse chauffante.

La **figure 10** représente les courbes de traction obtenues sur différents échantillons : A : de PHB/linalol non irradié et B : de PHB/linalol irradié. L'axe des abscisses représente la déformation en % et l'axe des ordonnées représente la contrainte en MPa.

La **figure 11** représente les courbes de traction obtenues sur différents échantillons : A : de PHBHV seul et B : de PHBHV/lignine insaturée, trithiol. L'axe des abscisses représente la déformation en % et l'axe des ordonnées représente la contrainte en MPa.

## EXEMPLES

### Exemple 1 : préparation d'un matériau PHA/huile tournesol.

Les inventeurs ont préparés des réseaux semi interpénétrés comportant des PHA et de réseaux réticulés à base d'huile. La réticulation de l'huile a été réalisée par réaction de thiolène. Cette réaction met en jeu l'addition des fonctions thiol du triméthylolpropane tris(3-mercaptopropionate), un trithiol polyfonctionnel sur les doubles liaisons des triglycérides. Cette réaction de thiolène est amorcée par un photoamorceur, le 2,2-diméthoxy-2-phényl acétophénone (DMPA) sous activation photochimique. L'incorporation d'huile dans des proportions déterminées (10 à 40% en poids par rapport au polymère) a pour but de conférer des nouvelles propriétés aux PHAs.

#### 1. Conditions expérimentales

Les inventeurs ont testé différents PHA : le P3HB ([O-CH(CH3)-CH2-CO-]), le P3HB88HV12 (obtenu chez Goodfellow ; [-O-CH(CH3)-CH2-CO-] à 88% ; [CH(CH2CH3)-$CH_2$-CO-] à 12%) et le PHO (obtenu chez EMPA ; [O-CH($C_5H_{11}$)-$CH_2$-CO-]).

Les conditions expérimentales de formation du réseau semi-RIP sont regroupées dans le Tableau suivant :

| | m PHBHV (mg) | m huile tournesol (mg) | m trithiol (mg) | DMPA (%wt) | $V_{CH2Cl2}$ (mL) |
|---|---|---|---|---|---|
| **PHBHV** | **0,3** | **0** | **0** | **0** | **2** |
| PHBHV / huile tournesol (10%wt) (Témoin) | 0,3 | 0,03 | **0** | **0** | 2 |
| PHBHV / huile tournesol (10%wt) | 0,3 | 0,03 | 0,037 | 8 | 2 |
| PHBHV / huile tournesol (20%wt) | 0,3 | 0,06 | 0,074 | 8 | 2 |
| PHBHV / huile tournesol (30%wt) | 0,3 | 0,09 | 0,11 | 8 | 2 |
| PHBHV / huile tournesol (40%wt) | 0,3 | 0,12 | 0,148 | 8 | 2 |
| **PHB** | **0,3** | **0** | **0** | **0** | **2** |
| PHB/huile (10%wt) **(Témoin)** | 0,3 | 0,03 | **0** | **0** | 2 |
| PHB/huile (10%wt) | 0,3 | 0,03 | 0,037 | 8 | 2 |
| PHB/huile (20%wt) | 0,3 | 0,06 | 0,074 | 8 | 2 |
| PHB/huile (50% wt) | 0,03 | 0,3 | 0,3 | 8 | 2 |
| PHB/huile (90% wt) | 0,06 | 0,54 | 0,54 | 8 | 2 |
| PHB/huile (100% wt) | 0 | 0,6 | 0,6 | 8 | 2 |

| | m PHBHV (mg) | m huile tournesol (mg) | m trithiol (mg) | DMPA (%wt) | $V_{CH2Cl2}$ (mL) |
|---|---|---|---|---|---|
| **PHO** | | | | | |
| PHO/huile (10%wt) | 0,3 | 0,03 | 0,037 | 8 | 2 |
| PHO/huile (20%wt) | 0,3 | 0,06 | 0,074 | 8 | 2 |
| PHO/huile (30%wt) | 0,3 | 0,09 | 0,11 | 8 | 2 |
| PHO/huile (40%wt) | 0,3 | 0,12 | 0,148 | 8 | 2 |

Le PHBHV a tout d'abord été précipité dans de l'éther de pétrole afin d'extraire le plastifiant, et le PHB, peu soluble dans les solvants organiques usuels (en raison de sa forte cristallinité) a été chauffé à 60°C dans la solution de dichlorométhane pendant 5 min avant d'ajouter les autres réactifs. La masse de trithiol a été calculée de manière à avoir un ratio $n_{SH/C=C} = 1$.

**2. Résultats PHB et PHBHV**

2.1. Tests mécaniques

Les tests de mécaniques ont été réalisés sur des éprouvettes normalisées, à l'aide d'une machine de traction (Instrom, modèle 5965). Les éprouvettes sont tirées à une vitesse fixée à 2 mm/min. Le principe du test de traction repose sur une sollicitation uniaxiale jusqu'à la rupture de l'éprouvette pour en déterminer des caractéristiques mécaniques telles que le module d'Young E (rigidité du matériau), l'allongement à la rupture, et la contrainte à la rupture. Les résultats sont rapportés dans le tableau suivant et aux **Figures 3 et 4**.

| | Contrainte à Rupture (MPa) | Module d'Young (MPa) | Allongement à rupture (%) |
|---|---|---|---|
| **PHBHV** | **11,8** | **1011** | **7** |
| PHBHV /huile (10%wt) **(Témoin sans trithiol et sans photoamorceur)** | 6 | 516 | 13,7 |
| PHBHV /huile (10%wt) | 9 | 266 | **150** |
| PHBHV /huile (20%wt) | 9,8 | 253 | **116** |
| PHBHV /huile (30%wt) | 8,6 | 346 | **75** |
| PHBHV /huile (40%wt) | 7,3 | 219 | **82** |
| **PHB** | **10,75** | **954** | **24,7** |
| PHB /huile (10%wt) **(Témoin sans trithiol et sans photoamorceur)** | 10,8 | 739 | 17,9 |
| Réseau PHB /huile (10%wt) | 9 | 235 | **61** |
| Réseau PHB /huile (20%wt) | 7,5 | 254 | **156** |

L'incorporation de l'huile dans le polyester, sans qu'il y ait réticulation modifie les propriétés mécaniques du PHA. En effet, les inventeurs ont observé une diminution signification du module d'Young (caractéristique de la dureté du matériau) passant de 1011 à 516 MPa pour le PHBHV et 954 à 739 MPa pour le PHB. L'huile gêne la cristallisation du polymère, ce qui entraîne une diminution du module.

Lorsque l'huile est réticulée au sein du polymère, les inventeurs ont observé une diminution plus marquée du module d'Young (entre 250 et 350 MPa pour les films de PHBHV, et 250 MPa pour les films de PHB) mais par contre on observe une augmentation considérable de l'allongement à la rupture (jusqu'à 150% de sa longueur initiale). Le matériau préparé a donc des propriétés élastiques contrairement au polymère initial et ce phénomène est particulièrement marqué.

L'huile réticulée (100%) forme quant à elle un gel transparent, sans tenue et très collant. Lorsque l'on ajoute du PHB (50%), le film devient facilement décollable, non collant et ce dernier ressemble fortement à du caoutchouc mais avec une absence de tenue (le film se déchire facilement) et les tests mécaniques n'ont pas pu être réalisés.

2.2. Propriétés thermiques

Les inventeurs ont étudié les propriétés thermiques des films PHB/huile avec une charge en huile allant de 50% à 100% afin de discuter de l'influence de l'huile dans le co-réseau. Les températures de dégradation thermique ont été évaluées par analyse thermogravimétrique (ATG). Les essais ont été réalisés à 20°C/min sur une plage de température allant de 20 à 800°C, sous air. L'allure des thermogrammes obtenus est caractéristique de la structure et de la composition du matériau.

Les résultats ATG présentés sur la **Figure 7** indiquent que PHB se dégrade vers 250°C. En présence d'huile, la température de dégradation est décalée vers les hautes températures. Le matériau ne commence à se décomposer qu'à partir de 300°C, et suit une dégradation progressive jusqu'à 500°C. La première étape de la dégradation thermique est attribuée au PHB et la seconde à la décomposition de l'huile réticulée. L'incorporation d'huile permet donc d'améliorer la stabilité thermique de la structure.

**2. Résultats PHO**

Dans cette étude, les inventeurs se sont également intéressés à la formation d'un réseau semi-RIP à partir d'un PHA à moyenne chaîne latérale (PHA-mcl).

Le mode opératoire est identique à celui des PHAs-scl décrit ci-dessus.

**Conclusion**

L'association des PHAs-scl et de l'huile réticulée a permis la synthèse d'un matériau souple qui n'avait jamais été observé dans la littérature. D'après les résultats obtenus, l'incorporation de 10% d'huile réticulée a suffi à améliorer

les propriétés élastiques du matériau. Cette propriété permet d'envisager la compétitivité de ce produit avec d'autres polymères comme le PVC-souple (polychlorure de vinyle souple), le PE-BD (polyéthylène basse densité) ou encore le PP (polypropylène). La comparaison des propriétés thermomécaniques de ces différents polymères est présentée dans le Tableau récapitulatif des propriétés thermiques et mécaniques des polymères usuels ci-après.

Les avantages du matériau synthétisé sont sa couleur transparente, son odeur fruitée et une température de fusion élevée (Tf=165°C) comparé à celle du PVC (Tf < à 150°C) ou du PE-BD (Tf = 115°C) ce qui permet d'élargir son domaine d'application. De plus, contrairement au PE-BD et au PVC, les PHA présentent une meilleure résistance aux UV.

Il est de même important de noter que les propriétés mécaniques des polymères purs (sans modification chimique) avec lesquels les inventeurs ont travaillé ne sont pas tout à fait similaires à ce qui a été décrit dans la littérature. En effet, le module d'Young du PHBHV que les inventeurs ont obtenu au cours de leurs essais est inférieur à la valeur théorique (1100 MPa au lieu de 1500 MPa pour un copolymère constitué de 12% d'unité HV). Il en est de même pour le PHB pour lequel ils ont obtenu un module d'environ 950 MPa au lieu de 3500 MPa. Cette différence peut être due aux conditions dans lesquelles ils se sont placés.

Le tableau suivant récapitule les propriétés thermiques et mécaniques des polymères usuels, ainsi que des exemples de matériaux selon l'invention

| Polymère | Contrainte à Rupture (MPa) | Module d'Young (MPa) | Allongement à la rupture (%) | T° de transition vitreuse °C) | T° de fusion (°C) | Remarque |
|---|---|---|---|---|---|---|
| PVC souple (PVC-P) | 20 - 35 | ‹ 1000 | 200 - 500 | -10, -40 | ‹ 150 | Sensible aux UV |
| PVC rigide (PVC-U) | 45 - 60 | 2000 - 3000 | 20 - 70 | 80 | ‹ 150 | |
| PA | 34 | 2500 | 30 | 50 | 200 | Sensible à l'humidité, faible résistance au feu |
| ***Polyoléfines*** | | | | | | |
| PE-BD | 10 - 13 | 200 - 300 | 60 – 400 | -110 | 115 | Sensible aux UV |
| PE-HD | 24 - 30 | 800 - 1200 | 15 | -110 | 130 | |
| PP | 15-30 | 110 - 1600 | 150-600 | -20 | 165 | |
| ***Transparents*** | | | | | | |
| PC | 63 | 2500 | 6 | 150 | 200 | |
| PMMA | 50 -70 | 3100 - 3300 | 2-4 | 110 -135 | 190 -240 | Très bonne transparence |
| PMMA choc | | 2000 | 30 | 110 -135 | 190 -240 | plexiglas |
| PS | | 2300 - 4000 | ‹ 3 | 80 | 200 | Economique, fragile |
| ***Thermodurcissables*** | | | | | | |
| PU | | variable | | variable | variable | Hydrofuge |
| Silicone | | 55-90 | variable | 0.2 à 0.4 | variable | Bonne tenue chimique et mécanique (fluage). Economique. Excellente tenue température |
| Caoutchouc (polyisoprène) | | Environ 1 | 100 - 800 | -60 | | Souvent renforcé par des charges (noir de carbone ou silice pour pneumatiques) |
| PHBHV | 11,8 | 1011 | 7 | -1 | 153 | |

| Polymère | Contrainte à Rupture (MPa) | Module d'Young (MPa) | Allongement à la rupture (%) | T° de transition vitreuse °C) | T° de fusion (°C) | Remarque |
|---|---|---|---|---|---|---|
| **Réseau semi-RIP PHBHV /huile (10%wt)** | **9** | **266** | **150** | **-7** | **151** | |
| PHB | 10,75 | 954 | 24,7 | 9 | 166 | |
| **Réseau semi-RIP PHB /huile (20%wt)** | **7,5** | **254** | **156** | **5** | **166** | |

**Exemple 2 : Préparation d'un matériau PLA ou PCL/huile**

Les inventeurs ont également formé des réseaux semi-RIP à partir d'acide polylactique ou PLA ou de polycaprolactone, ou PCL en se plaçant dans les mêmes conditions opératoires que celles décrites pour les PHA à l'exemple 1.

Les résultats sont rassemblés dans les tableaux 1 et 2 et représentés par les **figures 5 et 6**. On observe une diminution du module de Young et de la contrainte à la rupture et une amélioration de l'allongement à la rupture dans les deux cas. Ces résultats coïncident avec ceux obtenus avec les PHA. Il est donc possible d'utiliser ce procédé en utilisant d'autres polymères que les PHA.

Ce procédé peut être applicable à d'autres familles de polymères tels que les polyoléfines (PE-HD, PP), les polychlorures de vinyle rigide, les styréniques (PS), les polyacryliques (PMMA), les polyamides, les polycarbonates, polyester saturé (PBT, PET, polyalkylène téréphtalates)...

Les deux tableaux suivants montrent respectivement les résultats de tractions obtenus sur films PCL/huile/trithiol et PLA/huile/trithiol

| | Contrainte à Rupture (MPa) | Module d'Young (MPa) | Allongement à rupture (%) |
|---|---|---|---|
| PCL | 11 | 262 | 6 |
| PCL /huile (10%wt) | 8,5 | 124 | 12,5 |
| PCL /huile (20%wt) | 9 | 149 | 11 |
| PCL /huile (10%wt) mélange | 6 | 134 | 6,8 |
| PCL /huile (20%wt) mélange | 4,9 | 136 | 4,7 |

| | Contrainte à Rupture (MPa) | Module d'Young (MPa) | Allongement à rupture (%) |
|---|---|---|---|
| PLA | 12,5 | 988 | 76 |
| PLA /huile (10%wt) | 11,4 | 457 | 149 |
| PLA /huile (20%wt) | 14 | 419 | 85 |

**Exemple 3 : Préparation d'un matériau polyisopréne/huile**

Les inventeurs ont également formé des réseaux semi-RIP à partir de PHA et de polyisoprène, en se plaçant dans les mêmes conditions opératoires que celles décrites pour l'exemple 1.

Les résultats sont représentés par la **figure 8**. On observe une diminution du module de Young et de la contrainte à la rupture et une amélioration de l'allongement à la rupture (augmentation de 170% de sa longueur initiale). Ces résultats coïncident avec ceux obtenus avec les réseaux PHA/huile. Il est donc possible d'utiliser ce procédé en utilisant d'autres composés polyinsaturés que les huiles.

**Exemple 4 : Préparation d'un matériau PHA/huile par extrusion**

L'extrusion a été réalisée à l'aide d'une machine HAAKE Minilab II Microcompounder. L'équivalent de 7,5 $cm^3$ de mélange PHA /Huile/photoactivateur/trithiol est inséré dans la trémie d'alimentation. La température du four est fixée à 165°C et la vitesse de rotation des vis à 50 tours/min. L'injection de la matière est ensuite injectée à 170°C pendant 30 secondes avant d'être récupérée dans un moule.

**Exemple 5 : Préparation d'un matériau PHA/huile essentielle (linalol)**

Les inventeurs ont également formé des réseaux semi-RIP à partir de PHA et de linalol (3,7-diméthyl-1,6-octadién-3-ol). Dans un premier temps, une solution homogène contenant les réactifs suivants :

- du linalol,
- du trithiol ($n_{C=C}/n_{S-H}$=1), et
- du DMPA (5%wt),

a été préparée en solubilisant les composés à 50°C pendant 2 min.

En suite 0,3g de PHB a été mélangé à 25% en poids de la solution ci-dessus (ce qui représente 10% en poids de linalol). Le linalol permet de s'affranchir de l'ajout du $CH_2Cl_2$ pour dissoudre le PHB. Le mélange a été broyé avec un mortier pour homogénéiser le tout. Le mélange a été porté à 150°C pendant 2 min puis pressé à 1000kg/tons (presse mécanique (SPECAC)) pendant 2 min à 150°C pour obtenir un film.

Ensuite, les inventeurs ont procédé à l'irradiation du film sous lampe UV (lampe Hamamatsu LC8 (L8251), avec une longueur d'onde de 250 à 450 nm) pendant 300 secondes pour obtenir le réseau semi-interpénétré. Les films obtenus sont représentés aux **figures 9A et 9B**. Comme le montrent ces photos, tandis que le 100% PHB est très cassant opaque et dur, le réseau semi-RIP PHB/linalol/trithiol est flexible, ductile et transparent. Les tests mécaniques de tractions obtenus sur les films de PHB et de PHB/linalol sont indiqués dans le tableau ci-dessous :

| | Module d'Young (MPa) | Contrainte à Rupture (MPa) | Allongement à rupture (%) |
|---|---|---|---|
| 100% PHB | 3500 | 40 | 6 |
| PHB/linalol sans irradiation | 107 | 6 | 18,4 |
| PHB/linalol avec irradiation | 440 | 12,2 | 68 |

Ces données sont représentées à la **figure 10**.

La formulation avec le terpène (linalol) permet de s'affranchir de l'utilisation d'un solvant lors de la préparation du matériau. Le matériau obtenu présente un caractère plus souple que le PHB seul, ou le PHB/linalol sans irradiation, avec un allongement à la rupture qui passe de 6 à 68% ou de 18,4 à 68%.

**Exemple 6 : Préparation d'un matériau PHA/lignine modifiée**

Les inventeurs ont fonctionnalisé la lignine Kraft, en faisant agir un bromure d'allyle sur les fonctions alcool afin d'obtenir une lignine contenant des insaturations, se lon le schéma réactionnel suivant :

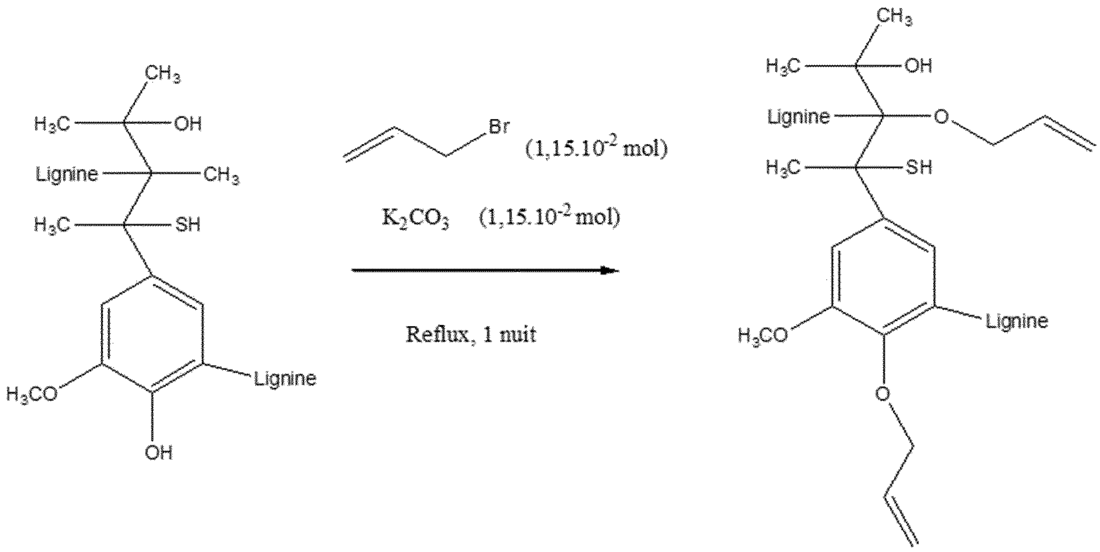


Cette lignine insaturée a par la suite été utilisée comme réactif pour former le réseau semi-RIP avec le trithiol, comme dans les exemples précédents.

Les tests mécaniques de tractions obtenus sur les films de PHBHV et de PHB/linalol sont indiqués dans le tableau ci-dessous :

| | Module d'Young (MPa) | Contrainte à Rupture (MPa) | Allongement à rupture (%) |
|---|---|---|---|
| 100% PHBHV | 1266 | 31 | 7 |
| PHB/lignine modifiée avec irradiation | 174 | 5,3 | 168 |

Ces données sont représentées à la **figure 11**.

Les résultats obtenus à partir de la lignine modifiée chimiquement montrent que le réseau semi-RIP peut être obtenu à partir de n'importe quelle molécule ou polymère auxquels on ajoute au moins deux insaturations.

L'invention n'est pas limitée aux modes de réalisation présentés et d'autres modes de réalisation apparaîtront clairement à l'homme du métier.

## Revendications

**1.** Matériau comprenant

- un premier polymère réticulé formant un réseau, ledit premier polymère étant obtenu par réaction thiol-ène entre

    ◦ une première composition comprenant au moins un premier composé carboné polyinsaturé comprenant au moins une chaine carbonée comprenant au moins 5 atomes de carbone, et
    ◦ au moins un second composé comprenant au moins deux fonctions - SH,

de sorte que si le premier composé polyinsaturé est bi-insaturé, ledit second composé comprend au moins trois fonctions -SH, et si le premier composé polyinsaturé est au moins tri-instauré, ledit second composé comprend au moins deux fonctions -SH,
et
- un second polymère constitué de n monomères, chacun des monomères ayant la formule I suivante :

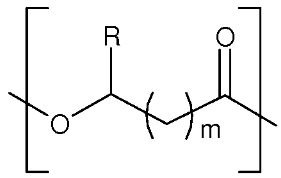

(Formule I)

où m varie de 0 à 4,
R est choisi parmi l'hydrogène et un groupe alkyl, notamment linéaire, en C1-C5, et
n est un entier naturel non nul supérieur ou égal à 100, ou au moins égal à 2, les n monomères étant identiques ou différents

ledit matériau étant tel qu'il forme un réseau semi-interpénétré où le second polymère est enchevêtré dans le réseau du premier polymère.

**2.** Matériau selon la revendication 1, dans lequel ledit premier au moins un premier composé carboné polyinsaturé comprenant au moins une chaine carbonée comprenant au moins 5 atomes de carbone représente 40% ou moins en poids par rapport au poids dudit second polymère.

**3.** Matériau selon la revendication 1 ou 2, dans lequel ledit premier composé est un triglycéride au moins bi-insaturé, ou un polyisoprène, des acides gras essentiels, ou des terpènes, notamment du carotène, du farnésène, du lycopène, du phytoène, du linalol ou du geraniol.

**4.** Matériau selon l'une quelconque des revendications 1 à 3, où ladite première composition comprend au moins un premier composé carboné polyinsaturé comprenant au moins une chaine carbonée insaturée est une composition comprenant ou constituée d'une ou plusieurs huiles choisie parmi les huiles végétales, les huiles de poisson, et les huiles microbiennes issues de microorganismes dits oléagineux, notamment une huile végétale telles que l'huile de colza, l'huile de colza oléique, l'huile de tournesol, notamment une huile de colza et/ou une huile de tournesol.

**5.** Matériau selon l'une quelconque des revendications 1 à 4, dans lequel le second polymère est un polymère de polyhydroxyalcanoate à courtes chaines latérales ou PHA-scl, constitué de n monomères de formule I où m varie de 1 à 3,
R est choisi parmi l'hydrogène, un groupe éthyle et un groupe méthyle, et
n est un entier naturel non nul, supérieur ou égal à 100,
lesdits PHA-scl étant notamment des poly-3-hydroxybutyrate ou PHB et/ou des poly(3-hydroxybutyrate-co-3-hydroxyvalerate) ou PHBHV.

**6.** Matériau selon l'une quelconque des revendications 1 à 5, dans lequel le composé comprenant au moins deux fonctions -SH est choisi parmi les composés suivants : le Triméthylolpropane tris(3-mercaptopropionate), le Pentaérythritol tetrakis(3-mercaptopropionate), le pentaérythritol tetrakis(3-mercaptobutyrate), le Glycol Dimercaptoacétate et le Tris[2-(3 mercaptopropionyloxy)éthyl]isocyanurate

**7.** Procédé de préparation d'un matériau, notamment tel que défini précédemment, ledit procédé comprenant

a) le mélange:

• d'une première composition comprenant au moins un premier composé carboné polyinsaturé comprenant au moins une chaine carbonée insaturée, avec
• au moins un composé comprenant au moins deux fonctions -SH,
• au moins un amorceur radicalaire,
• et moins un polymère constitué de n monomères, chacun des monomères ayant la formule I suivante :

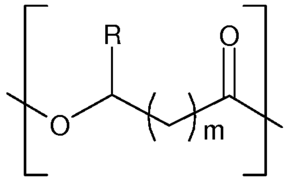

(Formule I)

où m varie de 0 à 4,
R est choisi parmi l'hydrogène, un groupe éthyle et un groupe alkyl, notamment linéaire, en C1-C5, et
n est un entier naturel non nul supérieur ou égal à 100, ou au moins égal à 2 les n monomères étant identiques ou différents,
pour obtenir une composition initiale,
et

b) une étape de réticulation du premier polymère entre ledit au moins un carboné polyinsaturé comprenant au moins une chaine carbonée insaturée et le composé comprenant au moins deux fonctions -SH.

**8.** Procédé selon la revendication 7, dans lequel l'amorceur radicalaire est un amorceur radicalaire photochimique, notamment choisi parmi la camphorquinone, l'éthyl 4-diméthylaminobenzoate, et le 2,2-diméthoxy-2-phénylacétophénone.

**9.** Procédé selon la revendication 7 ou la revendication 8, dans lequel ladite composition comprenant au moins un premier composé carboné polyinsaturé comprenant au moins une chaine carbonée insaturée est une composition comprenant ou constituée d'une ou plusieurs huiles choisie parmi les huiles végétales, les huiles de poisson, et les huiles microbiennes issues de microorganismes dits oléagineux, notamment une huile végétale telles que l'huile de colza, l'huile de colza oléique, l'huile de tournesol, notamment une huile de colza et/ou une huile de tournesol.

**10.** Procédé selon l'une quelconque des revendications 7 à 9, où la première composition comprenant ledit premier composé, représente 40% ou moins en poids par rapport au poids dudit polymère constitué de n monomères de formule I.

**11.** Procédé selon l'une quelconque des revendications 7 à 10, dans lequel le second polymère est un polymère de polyhydroxyalcanoate à courtes chaînes latérales ou PHA-scl, de formule I où m varie de 1 à 3,
R est choisi parmi l'hydrogène, un groupe éthyle et un groupe méthyle, et
n est un entier naturel non nul supérieur ou égale à 100,
lesdits PHA-scl étant notamment des poly-3-hydroxybutyrate ou PHB et/ou des poly(3-hydroxybutyrate-co-3-hydroxyvalerate) ou PHBHV.

**12.** Procédé selon l'une quelconque des revendications 7 à 11, dans lequel l'étape a) consiste en la mise en contact, pendant 15 à 30 minutes, dans un récipient approprié, une composition comprenant de l'huile de colza et/ou de tournesol avec

- du Triméthylolpropane tris(3-mercaptopropionate),
- du poly(3-hydroxybutyrate) et/ou du poly(3-hydroxybutyrate-co-3-hydroxyvalerate, et
- du 2,2-diméthoxy-2-phénylacétophénone,
- un solvant

pour former la composition initiale

**13.** Matériau susceptible d'être obtenu par le procédé tel que défini dans l'une quelconque des revendications 7 à 12, notamment tel que défini dans la revendication 12.

**14.** Utilisation d'un matériau tel que défini dans l'une quelconque des revendications 1 à 6 ou dans la revendication 13, pour la préparation de contenant alimentaires biodégradables et/ou compostables, d'emballages, de revêtements, notamment de revêtements de surfaces, pour la préparation de pièces injectées ou fabriquées par extrusion ou pour la préparation de revêtements de surfaces, notamment pour la fabrication de revêtement intérieurs pour véhicules, ou encore pour la préparation de textiles ou de cordages.

**15.** Matériau tel que défini dans l'une quelconque des revendications 1 à 6 ou dans la revendication 13, pour son utilisation en chirurgie humaine ou animale.

## Patentansprüche

**1.** Werkstoff, umfassend

- ein erstes vernetztes, ein Netzwerk bildendes Polymer, wobei das Polymer erhalten wird durch Thiol-En-Reaktion zwischen

  ◦ einer ersten Zusammensetzung, die wenigstens eine erste mehrfach ungesättigte Kohlenstoffverbindung umfasst, die wenigstens eine Kohlenstoffkette umfasst, die wenigstens 5 Kohlenstoffatome umfasst, und
  ◦ wenigstens einer zweiten Verbindung, die wenigstens zwei -SH-Funktionen umfasst,

derart, dass, wenn die erste mehrfach ungesättigte Verbindung zweifach ungesättigt ist, die zweite Verbindung wenigstens drei -SH-Funktionen umfasst, und, wenn die erste mehrfach ungesättigte Verbindung wenigstens dreifach ungesättigt ist, die zweite Verbindung wenigstens zwei -SH-Funktionen umfasst, und

- ein zweites Polymer, das aus n Monomeren besteht, wobei jedes der Monomere die folgende Formel I aufweist:

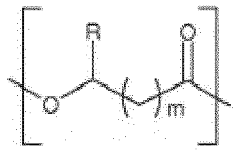

Formel (I)

worin m von 0 bis 4 variiert,
R ausgewählt ist aus Wasserstoff und einer, insbesondere linearen, C1-C5-Alkylgruppe, und
n eine natürliche Zahl ungleich null größer oder gleich 100, oder wenigstens gleich 2, ist, wobei die n Monomere identisch oder verschieden sind, wobei der Werkstoff dergestalt ist, dass er ein semi-interpenetrierendes Netzwerk bildet, wobei das zweite Polymer in dem Netzwerk des ersten Polymers verschachtelt ist.

**2.** Werkstoff nach Anspruch 1, wobei die erste, wenigstens eine erste mehrfach ungesättigte Kohlenstoffverbindung, die wenigstens eine Kohlenstoffkette umfasst, die wenigstens 5 Kohlenstoffatome umfasst, 40 Gew.-% oder weniger in Bezug auf das Gewicht des zweiten Polymers darstellt.

**3.** Werkstoff nach Anspruch 1 oder 2, wobei die erste Verbindung ein wenigstens zweifach ungesättigtes Triglycerid, oder ein Polyisopren, essentielle Fettsäuren, oder Terpene, insbesondere Carotin, Farnasen, Lycopin, Phytoen, Linalool oder Geraniol ist.

**4.** Werkstoff nach einem der Ansprüche 1 bis 3, wobei die erste Zusammensetzung wenigstens eine erste mehrfach ungesättigte Kohlenstoffverbindung umfasst, die wenigstens eine ungesättigte Kohlenstoffkette umfasst, eine Zusammensetzung ist, die eines oder mehrere Öle umfasst oder daraus besteht, ausgewählt aus pflanzlichen Ölen, Fischöl und mikrobiellen Ölen, die von so genannten ölpflanzlichen Mikroorganismen stammen, insbesondere ein pflanzliches Öl wie Rapsöl, Ölsäure-Rapsöl, Sonnenblumenöl, insbesondere ein Rapsöl und/oder ein Sonnenblumenöl.

**5.** Werkstoff nach einem der Ansprüche 1 bis 4, wobei das zweite Polymer ein Polyhydroxyalkanoat-Polymer mit kurzen Seitenketten oder PHA-scl ist, das aus n Monomeren der Formel I besteht, worin m von 1 bis 3 variiert,
R ausgewählt ist aus Wasserstoff, einer Ethylgruppe und einer Methylgruppe und
n eine natürliche Zahl ungleich null, größer oder gleich 100, ist,
wobei die PHA-scl insbesondere Poly-3-hydroxybutyrat oder PHB und/oder Poly(3-hydroxybutyrat-co-3-hydroxyvalerat) oder PHBHV sind.

**6.** Werkstoff nach einem der Ansprüche 1 bis 5, wobei die Verbindung, die wenigstens zwei -SH-Funktionen umfasst, ausgewählt ist aus den folgenden Verbindungen:

Trimethylolpropan-tris(3-mercaptopropionat),
Pentaerythritoltetrakis(3-mercaptopropionat),
Pentaerythritoltetrakis(2-mercaptobutyrat),
Glykoldimercaptoacetat und Tris[2-(3 mercaptopropionyloxy)ethyl]isocyanurat.

**7.** Verfahren zum Herstellen eines Werkstoffs, insbesondere wie oben definiert, wobei das Verfahren Folgendes umfasst:

a) Mischen:

- einer ersten Zusammensetzung, die wenigstens eine erste mehrfach ungesättigte Kohlenstoffverbindung umfasst, die wenigstens eine Kohlenstoffkette umfasst, mit
- wenigstens einer Verbindung, die wenigstens zwei - SH-Funktionen umfasst,
- wenigstens einem radikalischen Initiator,
- und wenigstens einem Polymer, das aus n Monomeren besteht, wobei jedes der Monomere die folgende Formel I aufweist:

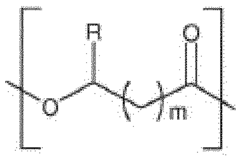
Formel (I)

worin m von 0 bis 4 variiert,
R ausgewählt ist aus Wasserstoff, einer Ethylgruppe und einer, insbesondere linearen, C1-C5-Alkylgruppe, und
n eine natürliche Zahl ungleich null größer oder gleich 100, oder wenigstens gleich 2, ist, wobei die n Monomere identisch oder verschieden sind, zur Herstellung einer Ausgangszusammensetzung und

b) einen Schritt der Vernetzung des ersten Polymers zwischen der wenigstens einen mehrfach ungesättigten Kohlenstoff, die wenigstens eine ungesättigte Kohlenstoffkette umfasst, und der Verbindung, die wenigstens zwei -SH-Funktionen umfasst.

**8.** Verfahren nach Anspruch 7, bei dem der radikalische Initiator ein fotochemischer radikalischer Initiator ist, der insbesondere ausgewählt ist aus Campherchinon, Ethyl-4-dimethylaminobenzoat und 2,2-Dimethoxy-2-phenylacetophenon.

**9.** Verfahren nach Anspruch 7 oder Anspruch 8, bei dem die Zusammensetzung, die wenigstens eine erste mehrfach ungesättigte Kohlenstoffverbindung umfasst, die wenigstens eine ungesättigte Kohlenstoffkette umfasst, eine Zusammensetzung ist, die eines oder mehrere Öle umfasst oder daraus besteht, ausgewählt aus pflanzlichen Ölen, Fischöl und mikrobiellen Ölen, die von so genannten ölpflanzlichen Mikroorganismen stammen, insbesondere ein pflanzliches Öl wie Rapsöl, Ölsäure-Rapsöl, Sonnenblumenöl, insbesondere ein Rapsöl und/oder ein Sonnenblumenöl.

**10.** Verfahren nach einem der Ansprüche 7 bis 9, bei dem die erste Zusammensetzung, welche die erste Verbindung umfasst, 40 Gew.-% oder weniger in Bezug auf das Gewicht des zweiten Polymers darstellt, das aus n Monomeren der Formel I besteht.

**11.** Verfahren nach einem der Ansprüche 7 bis 10, bei dem das zweite Polymer ein Polyhydroxyalkanoat-Polymer mit kurzen Seitenketten oder PHA-scl, der Formel I, ist, worin m von 1 bis 3 variiert,
R ausgewählt ist aus Wasserstoff, einer Ethylgruppe und einer Methylgruppe und
n eine natürliche Zahl ungleich null größer oder gleich 100 ist,
wobei die PHA-scl insbesondere Poly-3-hydroxybutyrat oder PHB und/oder Poly(3-hydroxybutyrat-co-3-hydroxyvalerat) oder PHBHV sind.

**12.** Verfahren nach einem der Ansprüche 7 bis 11, bei dem Schritt a) in dem Inkontaktbringen, während eines Zeitraums von 15 bis 30 Minuten, in einem geeigneten Behälter, einer Zusammensetzung, die Rapsöl und/oder Sonnenblumenöl umfasst, mit

- Trimethylolpropan-tris(3-mercaptopropionat),
- Poly(3-hydroxybutyrat) und/oder Poly(3-hydroxybutyrat-co-3-hydroxyvalerat) und
- 2,2-Dimethoxy-2-phenylacetophenon,
- einem Lösemittel

zur Bildung der Ausgangszusammensetzung besteht.

**13.** Werkstoff, der erhaltbar ist durch das Verfahren nach einem der Ansprüche 7 bis 12, insbesondere nach Anspruch 12.

**14.** Verwendung eines Werkstoffs nach einem der Ansprüche 1 bis 6 oder nach Anspruch 13, zum Herstellen von biologisch abbaubaren und/oder kompostierbaren Lebensmittelbehältern, von Verpackungen, von Verkleidungen, insbesondere von Verkleidungen von Oberflächen, zum Herstellen von Spritzgussteilen oder durch Extrudieren hergestellten Teilen oder zum Herstellen von Verkleidungen von Oberflächen, insbesondere zum Herstellen von Innenverkleidungen von Fahrzeugen, oder auch zum Herstellen von Textilien oder von Seilerwaren.

**15.** Werkstoff nach einem der Ansprüche 1 bis 6 oder nach Anspruch 13 zur Verwendung in der Human- oder Tierchirurgie.

**Claims**

**1.** A material comprising

- a first crosslinked polymer forming a network, said first polymer being obtained by thiol-ene reaction between

◦ a first composition comprising at least one first polyunsaturated carbon-based compound comprising at least one carbon-based chain comprising at least 5 carbon atoms, and
◦ at least one second compound comprising at least two -SH functions, such that if the first polyunsaturated compound is bi-unsaturated, said second compound comprises at least three -SH functions, and if the first polyunsaturated compound is at least tri-unsaturated, said second compound comprises at least two -SH functions,
and

- a second polymer consisting of n monomers, each of the monomers having the following formula I:

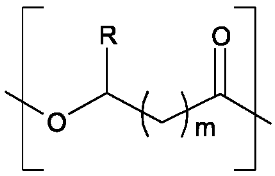

(Formula I)

where m ranges from 0 to 4,
R is selected from hydrogen and an especially linear C1-C5 alkyl group, and
n is a non-zero natural integer greater than or equal to 100, or at least equal to 2,
the n monomers being identical or different

said material being such that it forms a semi-interpenetrating network in which the second polymer is entangled in the network of the first polymer.

**2.** The material according to claim 1, wherein said first at least one first polyunsaturated carbon-based compound comprising at least one carbon-based chain comprising at least 5 carbon atoms represents 40% or less by weight relative to the weight of said second polymer.

**3.** The material according to claim 1 or 2, wherein said first compound is an at least bi-unsaturated triglyceride, or a polyisoprene, essential fatty acids, or terpenes, especially carotene, farnesene, lycopene, phytoene, linalool or geraniol.

**4.** The material according to anyone of claims 1 to 3, wherein said first composition comprises at least one first polyunsaturated carbon-based compound comprising at least one unsaturated carbon-based chain is a composition comprising or consisting of one or more oils selected from vegetable oils, fish oils, and microbial oils resulting from microorganisms referred to as oleaginous, especially a vegetable oil such as rapeseed oil, oleic rapeseed oil, sunflower oil, especially a rapeseed oil and/or a sunflower oil.

**5.** The material according to anyone of claims 1 to 4, wherein the second polymer is a polyhydroxyalkanoate polymer with short side chains, or PHA-scl, consisting of n monomers of formula I, where m ranges from 1 to 3,
R is selected from hydrogen, an ethyl group and a methyl group, and
n is a non-zero natural integer greater than or equal to 100,
said PHA-scls being especially poly-3-hydroxybutyrates or PHBs and/or poly(3-hydroxybutyrate-co-3-hydroxyvalerate)s or PHBHVs.

**6.** The material according to anyone of claims 1 to 5, wherein the compound comprising at least two -SH functions is selected from the following compounds: trimethylolpropane tris(3-mercaptopropionate), pentaerythritol tetrakis(3-mercaptopropionate), pentaerythritol tetrakis(3-mercaptobutyrate), glycol dimercaptoacetate and tris[2-(3-mercaptopropionyloxy)ethyl] isocyanurate.

**7.** A process for preparing a material, especially as defined above,
said process comprising

**a)** the mixing:

- of a first composition comprising at least one first polyunsaturated carbon-based compound comprising at least one unsaturated carbon-based chain, with
- at least one compound comprising at least two -SH functions,
- at least one radical initiator,
- and at least one polymer consisting of n monomers, each of the monomers having the following formula I:

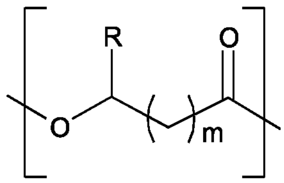

(Formula I)

where m ranges from 0 to 4,
R is selected from hydrogen, an ethyl group and an especially linear C1-C5 alkyl group, and
n is a non-zero natural integer greater than or equal to 100, or at least equal to 2, the n monomers being identical or different,
to obtain an initial composition,
and

**b)** a step of crosslinking the first polymer between said at least one polyunsaturated carbon-based comprising at least one unsaturated carbon-based chain and the compound comprising at least two -SH functions.

**8.** The process according to claim 7, wherein the radical initiator is a photochemical radical initiator, especially selected from camphorquinone, ethyl 4-dimethylaminobenzoate, and 2,2-dimethoxy-2-phenylacetophenone.

**9.** The process according to claim 7 or claim 8, wherein said composition comprising at least one first polyunsaturated carbon-based compound comprising at least one unsaturated carbon-based chain is a composition comprising or consisting of one or more oils selected from vegetable oils, fish oils, and microbial oils resulting from microorganisms referred to as oleaginous, especially a vegetable oil such as rapeseed oil, oleic rapeseed oil, sunflower oil, especially

a rapeseed oil and/or a sunflower oil.

**10.** The process according to anyone of claims 7 to 9, wherein the first composition comprising said first compound represents 40% or less by weight relative to the weight of said polymer consisting of n monomers of formula I.

**11.** The process according to anyone of claims 7 to 10, wherein the second polymer is a polyhydroxyalkanoate polymer with short side chains, or PHA-scl, of formula I, where m ranges from 1 to 3,
R is selected from hydrogen, an ethyl group and a methyl group, and
n is a non-zero natural integer greater than or equal to 100,
said PHA-scls being especially poly-3-hydroxybutyrates or PHBs and/or poly(3-hydroxybutyrate-co-3-hydroxyvalerate)s or PHBHVs.

**12.** The process according to anyone of claims 7 to 11, wherein step a) consists of, for 15 to 30 minutes in a suitable receptacle, bringing a composition comprising rapeseed oil and/or sunflower oil into contact with

- Trimethylolpropane tris(3-mercaptopropionate),
- poly(3-hydroxybutyrate) and/or poly(3-hydroxybutyrate-co-3-hydroxyvalerate), and
- 2,2-dimethoxy-2-phenylacetophenone,
- a solvent

to form the initial composition.

**13.** A material able to be obtained by the foregoing as defined in any one of claims 7 to 12, especially as defined in claim 12.

**14.** The use of a material as defined in anyone of claims 1 to 6 or in claim 13 for the preparation of biodegradable and/or compostable food containers, packaging, coatings, especially surface coatings, for the preparation of injected parts or parts manufactured by extrusion or for the preparation of surface coatings, especially for the manufacture of interior coatings for vehicles or else for the preparation of textiles or ropes.

**15.** The material as defined in any one of claims 1 to 6 or in claim 13, for its use in human or animal surgery.

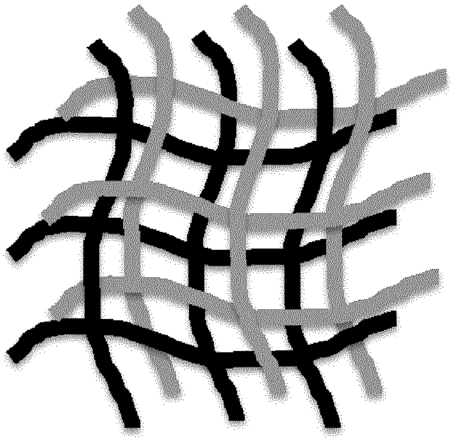

Figure 1A

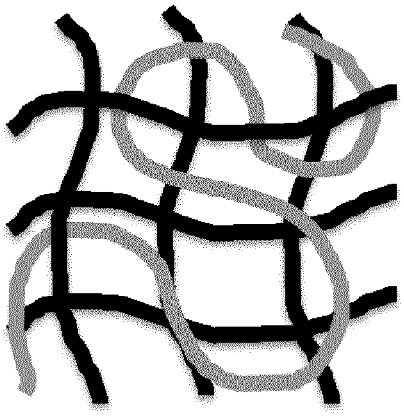

Figure 1B

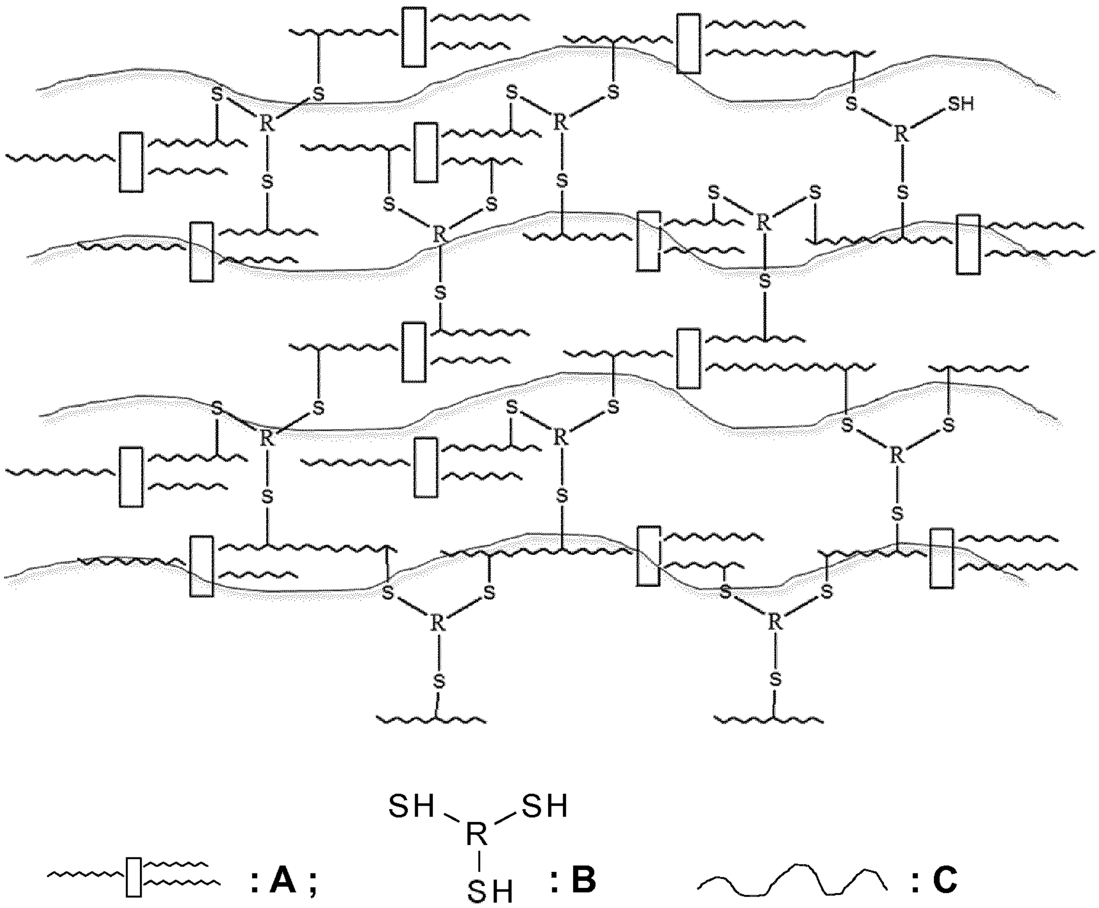


Figure 2

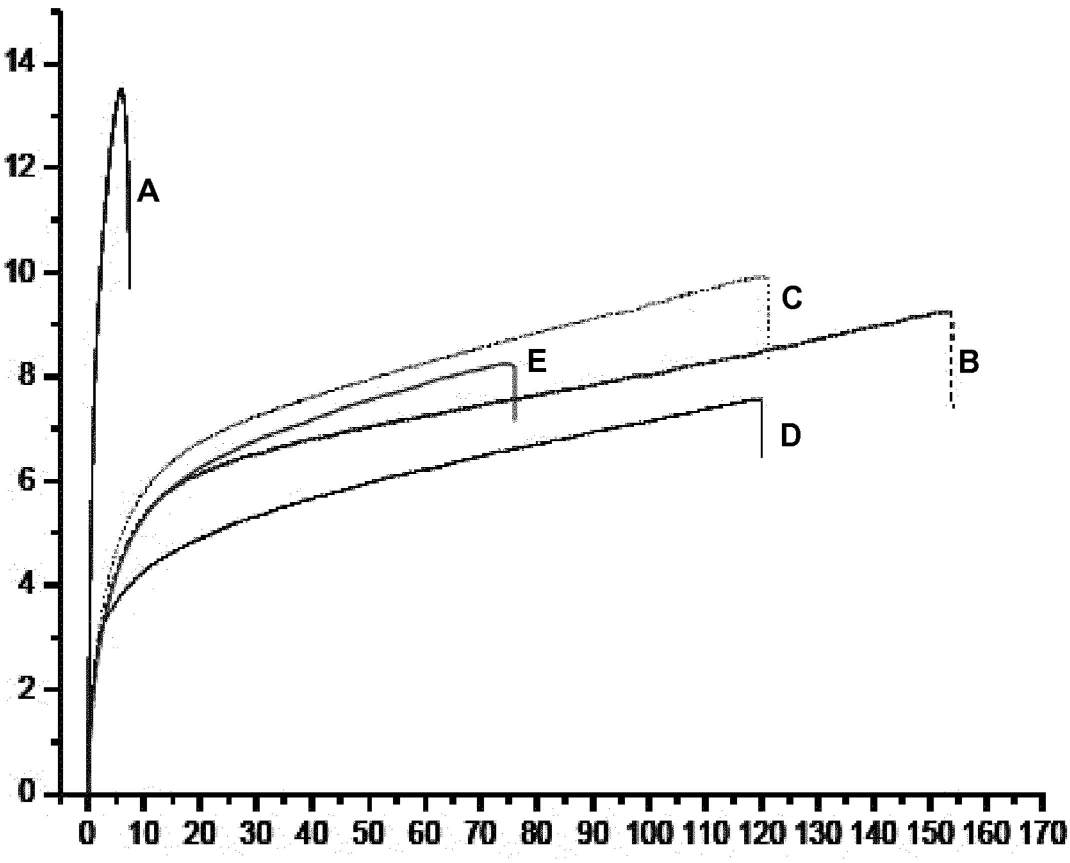


Figure 3

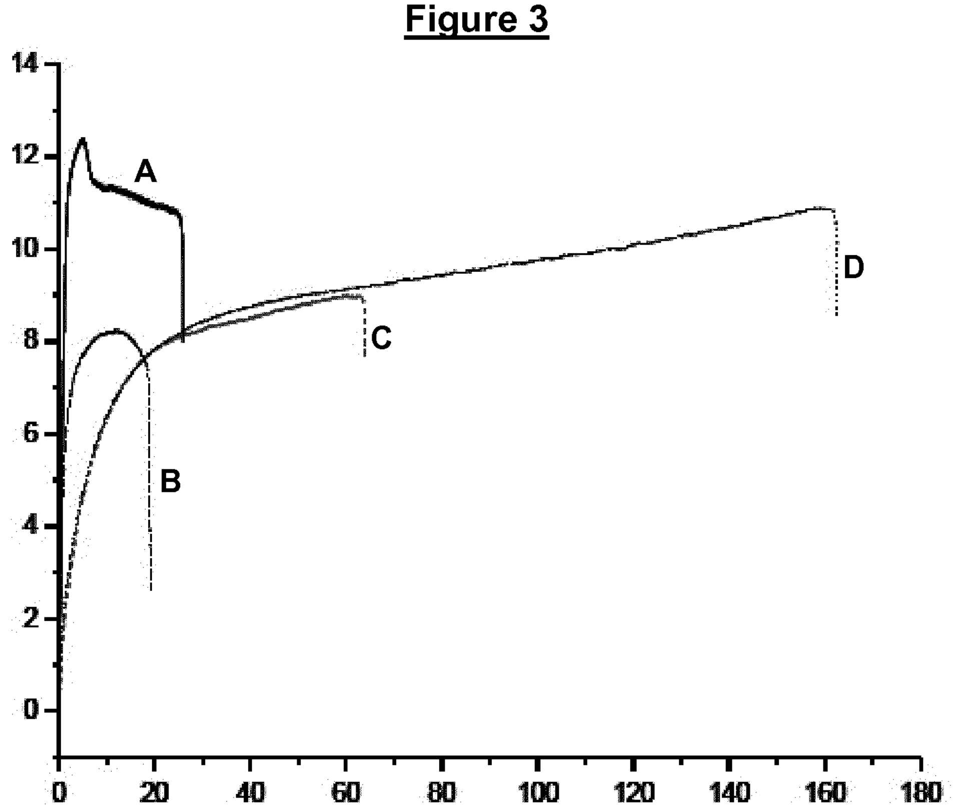


Figure 4

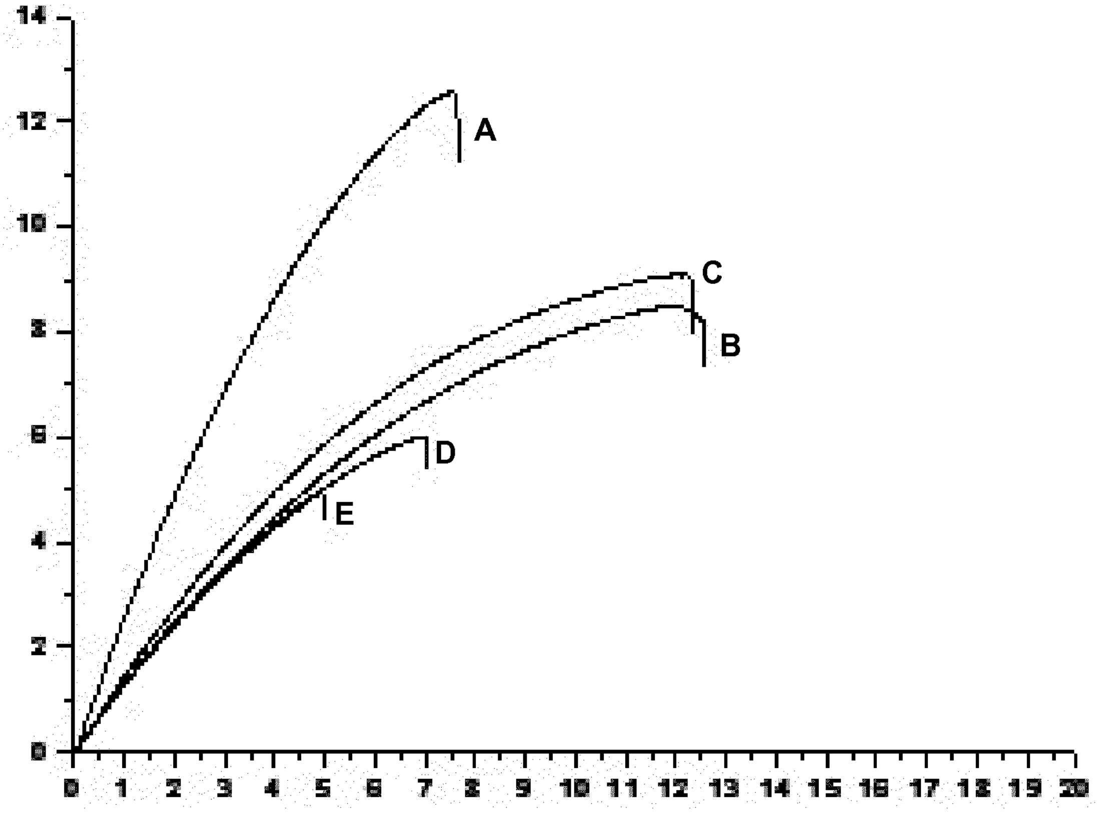


Figure 5

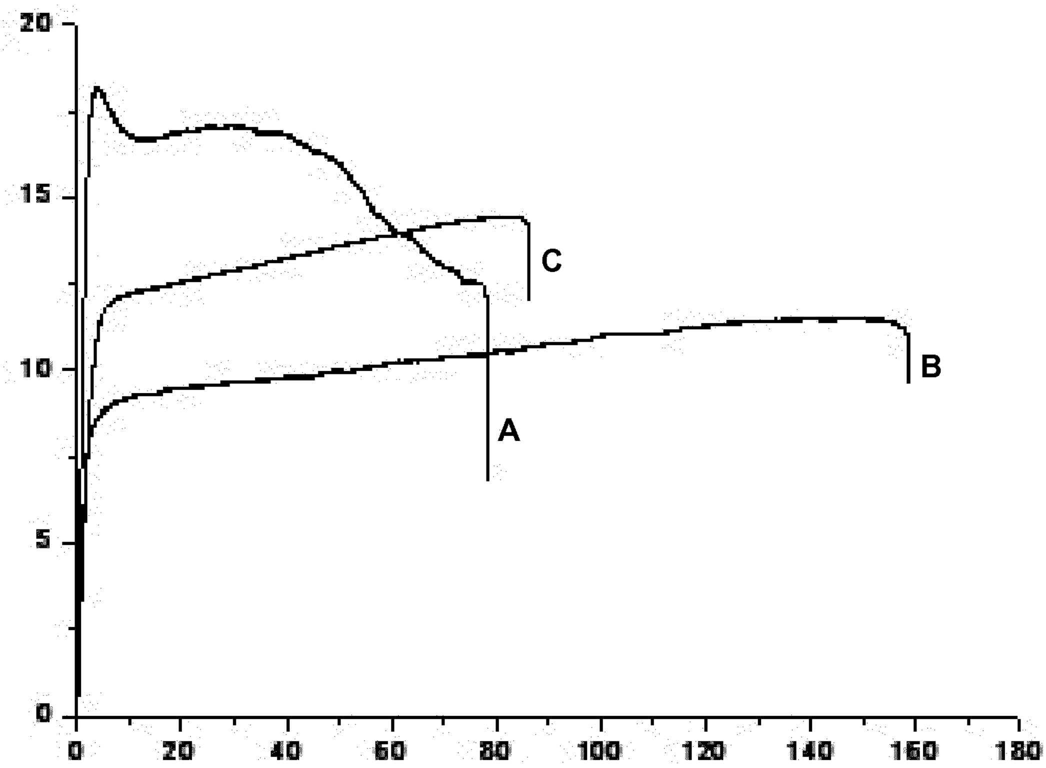


Figure 6

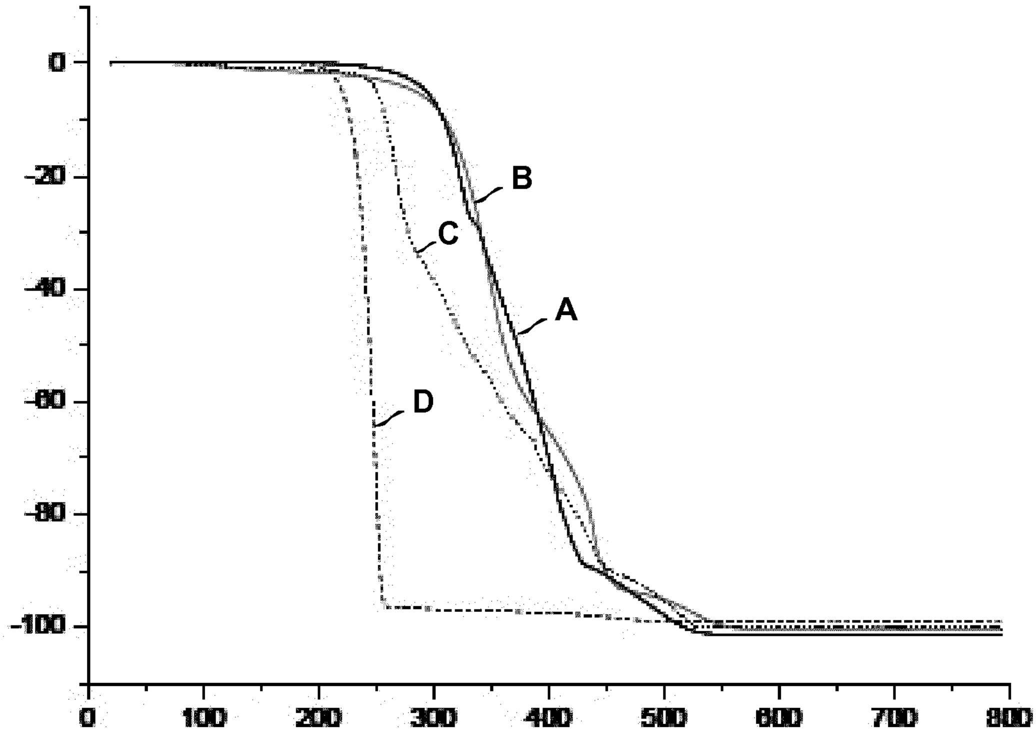


Figure 7

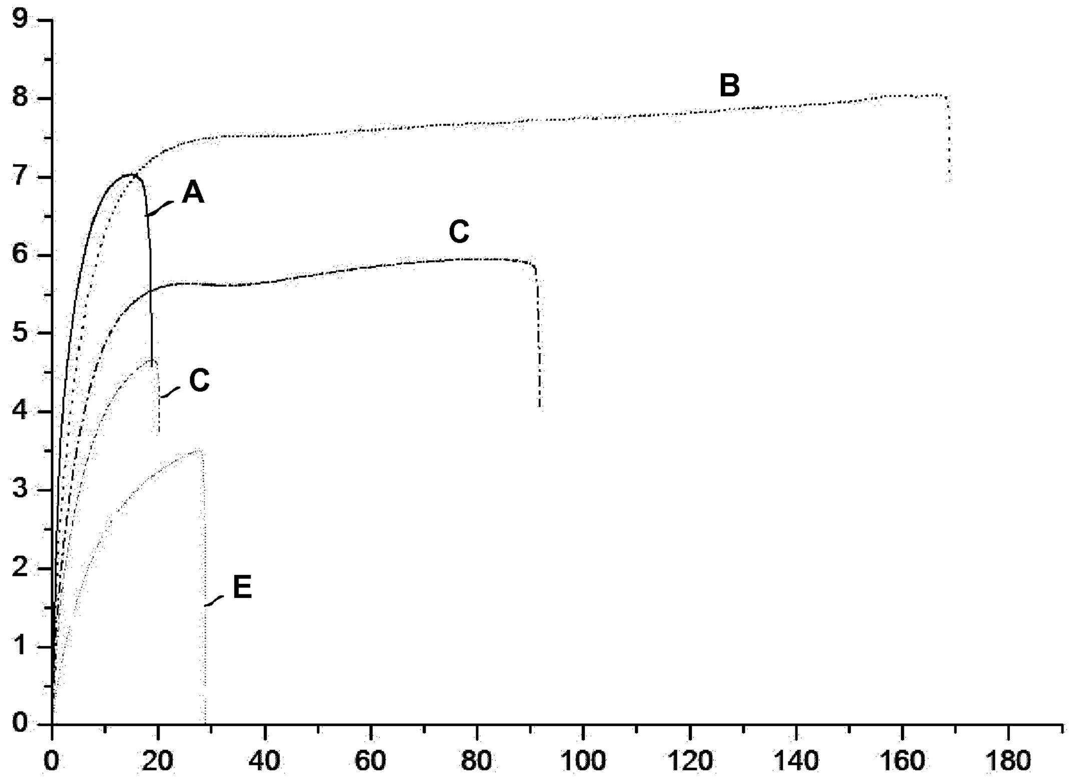


Figure 8

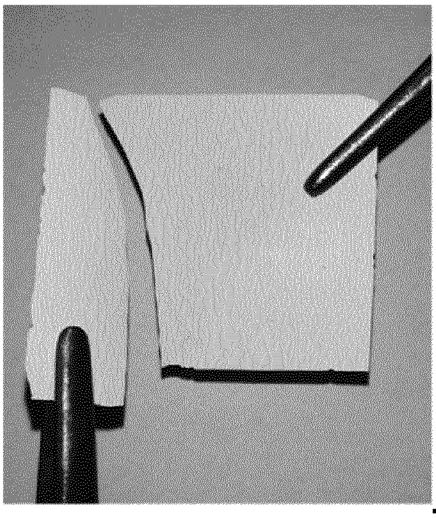

Figure 9A

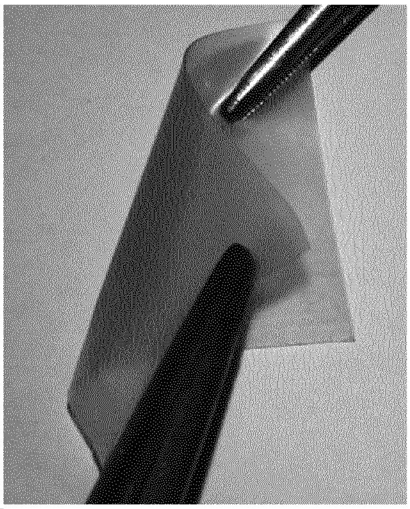

Figure 9B

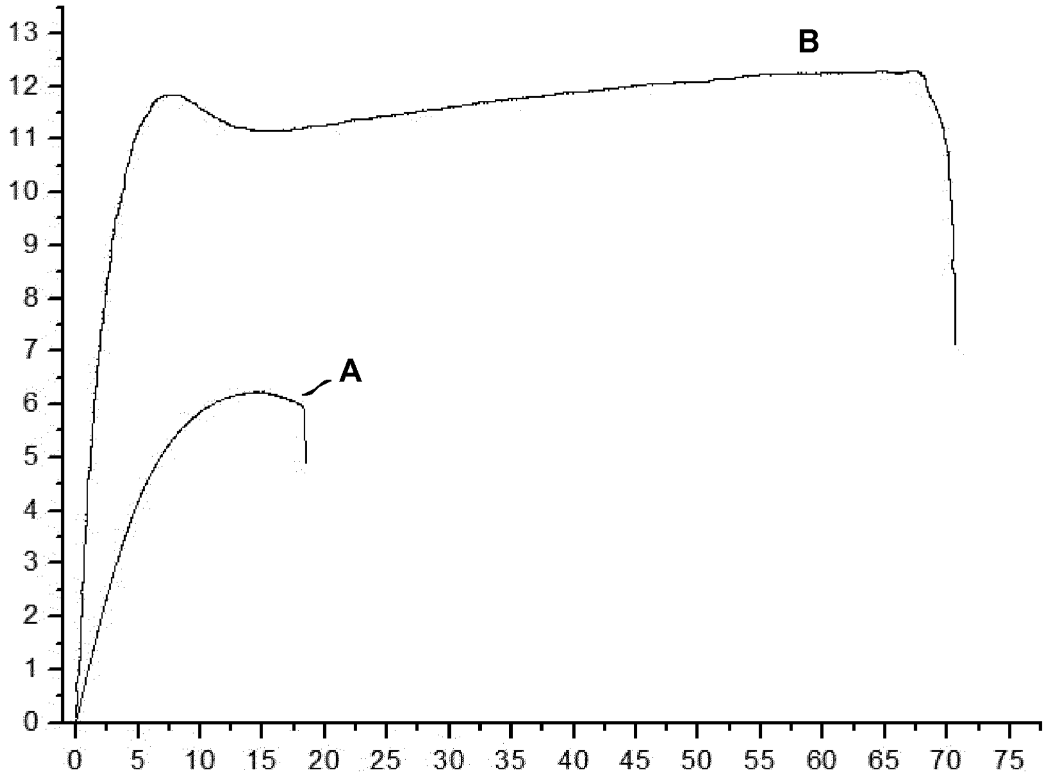


Figure 10

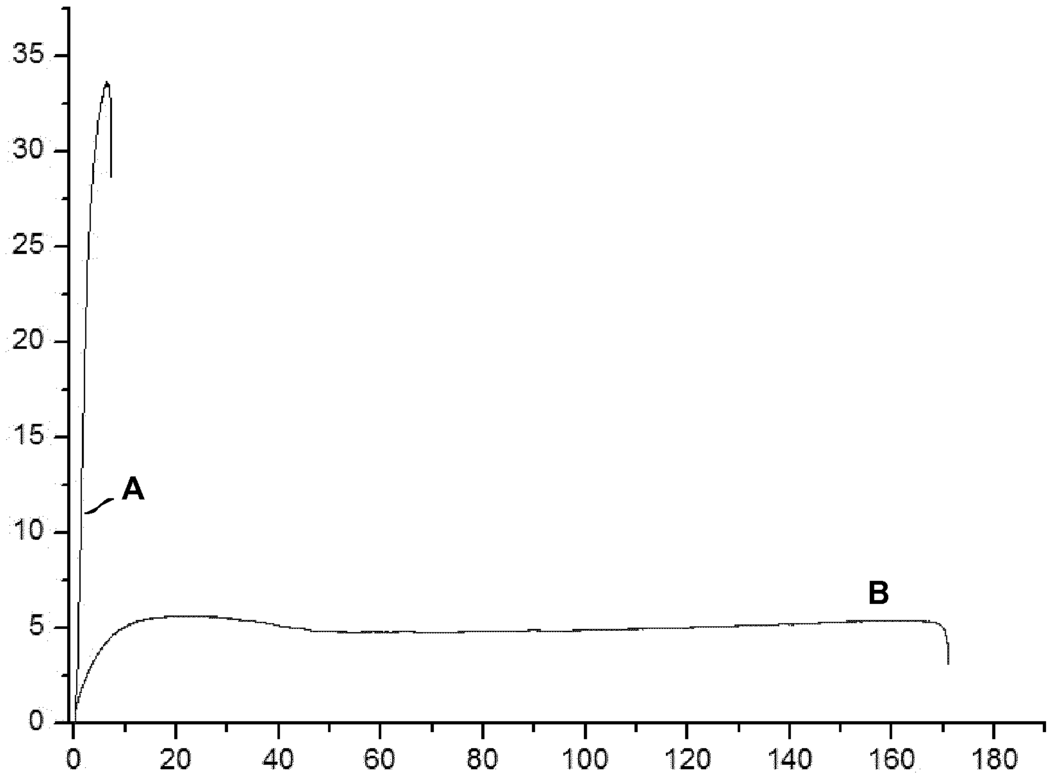


**Figure 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 102011012869